# EUROPEAN PATENT APPLICATION

(11) **EP 4 664 845 A1**
(43) Date of publication of application: **17.12.2025**
(21) Application number: 24752749.2
(22) Date of filing: 31.01.2024
(51) Int. Cl.: H04L 43/08

(54) **INFORMATION PROCESSING METHOD, AND DEVICE AND READABLE STORAGE MEDIUM**

(30) Priority: 06.02.2023 CN 202310132977
(71) Applicant: Datang Mobile Communications Equipment Co., Ltd., Beijing 100085 (CN)
(72) Inventor: HUANG, Qiuping, Beijing 100085 (CN); GAO, Qiubin, Beijing 100085 (CN); WANG, Da, Beijing 100085 (CN); FEI, Yongqiang, Beijing 100085 (CN)
(74) Representative: dompatent
(86) International application number: PCT/CN2024/074816
(87) International publication number: WO 2024/164893

(57) **Abstract**

An information processing method, a device, and readable storage medium are provided. The method includes: transmitting first CSI to a network device; receiving second CSI transmitted by the network device in response to the first CSI; and evaluating a performance of a first model and/or a first method based on the second CSI, where the first model is a model for determining CSI, and the first method is a method for determining and/or feeding back CSI.

## Description

The present disclosure claims a priority of Chinese patent application No. 202310132977.8 filed on February 06, 2023 titled "INFORMATION PROCESSING METHOD, DEVICE, AND READABLE STORAGE MEDIUM" which is incorporated herein by reference in its entirety.

### TECHNICAL FIELD

The present disclosure relates to the field of communication technologies, and in particular, to an information processing method, a device, and readable storage medium.

### BACKGROUND

In the NR (New Radio) system, a DL (Downlink) Type II codebook can achieve relatively good CSI (Channel State Information) feedback accuracy. However, the feedback overhead of the DL Type II codebook is relatively large. Studies have shown that performing CSI compression feedback based on an AI (Artificial Intelligence)/ML (Machine Learning) model can reduce CSI feedback overhead under the same CSI feedback accuracy or improve CSI feedback accuracy under the same CSI feedback overhead.

Regarding the performance monitoring issue of AI/ML models, related technologies propose considering some monitoring indicators, such as using Intermediate KPIs (Key Performance Indicators) as monitoring metrics. For the calculation of Intermediate KPIs, the calculation method proposed in related technologies is cumbersome, thereby affecting the efficiency of performance monitoring for AI/ML models or methods.

### SUMMARY

Embodiments of the present disclosure provide an information processing method, a device, and a readable storage medium to improve performance monitoring efficiency.

A first aspect of the embodiments of the present disclosure provides an information processing method applied to a terminal. The method includes:
transmitting first CSI to a network device;
receiving second CSI transmitted by the network device in response to the first CSI;
evaluating performance of a first model and/or a first method based on the second CSI, where the first model is a model used for determining CSI, and the first method is a method for determining and/or feeding back CSI.

Optionally, evaluating the performance of the first model and/or the first method based on the second CSI includes:
evaluating the performance of the first model and/or the first method based on the second CSI and an association relationship between the second CSI and the first CSI; or
evaluating the performance of the first model and/or the first method based on the second CSI and an association relationship between the second CSI and a target object;
the target object has an association relationship with the first CSI.

Optionally, the method further includes:
obtaining the association relationship between the second CSI and the first CSI based on the association relationship between the second CSI and the target object; or
obtaining the association relationship between the second CSI and the target object based on the association relationship between the second CSI and the first CSI.

Optionally, receiving the second CSI transmitted by the network device in response to the first CSI includes: receiving the second CSI based on the association relationship between the second CSI and the first CSI; or receiving the second CSI based on the association relationship between the second CSI and the target object.

Optionally, the method further includes any one of:
receiving first indication information transmitted by the network device, and obtaining the association relationship between the second CSI and the target object based on the first indication information, where the first indication information is used to indicate the association relationship between the second CSI and the first CSI and/or the association relationship between the second CSI and the target object;
pre-agreeing with the network device on the association relationship between the second CSI and the first CSI and/or the association relationship between the second CSI and the target object;
transmitting second indication information to the network device, where the second indication information is used to indicate the association relationship between the second CSI and the first CSI and/or the association relationship between the second CSI and the target object.

Optionally, the first indication information includes one or more of:
information indicating first information corresponding to the second CSI, where the first information includes one or more of: an identifier of a reference signal and/or a transmission occasion of the reference signal, an identifier of a reference signal resource and/or a transmission occasion of the reference signal resource, an identifier of a reference signal resource set and/or a transmission occasion of the reference signal resource set, a reference signal resource configuration, a reference resource configuration;
third indication information, where the third indication information is used to indicate an association relationship between the second CSI and CSI report configuration information, and/or used to indicate an association relationship between the second CSI and time domain resource information and/or frequency domain resource information of a CSI report;
fourth indication information, where the fourth indication information is used to indicate channel-related information corresponding to the second CSI;
fifth indication information, where the fifth indication information is used to indicate an identifier of a model corresponding to the second CSI;
sixth indication information, where the sixth indication information is used to indicate a time offset between a transmission occasion of the first CSI and a transmission occasion of the second CSI;
seventh indication information, where the seventh indication information is used to indicate an association relationship between the second CSI and a model;
eighth indication information, where the eighth indication information is used to indicate an ordering manner of the second CSI in data or signaling carrying the second CSI;
ninth indication information, where the ninth indication information is used to indicate second information corresponding to the first CSI, where the second information includes one or more of:
information of a channel where the second CSI is transmitted;
resource information corresponding to the second CSI;
a transmission occasion corresponding to the second CSI;
model information corresponding to the second CSI.

Optionally, the association relationship between the second CSI and the first CSI includes one or more of:
the second CSI corresponds to the first CSI corresponding to the first information;
the second CSI corresponds to the first CSI satisfying a first condition and corresponding to the first information;
the second CSI corresponds to the first CSI corresponding to the third indication information;
the second CSI corresponds to the first CSI satisfying a second condition and corresponding to the third indication information;
the second CSI corresponds to the first CSI corresponding to the fourth indication information;
a model identifier corresponding to the first CSI corresponds to a model identifier corresponding to the second CSI;
a time offset between the transmission occasion of the first CSI and the transmission occasion of the second CSI is related to the time offset indicated by the sixth indication information;
the first CSI corresponds to the model corresponding to the second CSI;
the second CSI corresponds to the first CSI corresponding to the order of the second CSI;
the second CSI corresponds to a CSI report of the first CSI corresponding to the order of the second CSI;
the first CSI corresponds to the second CSI corresponding to the second information.

Optionally, in a case where the first CSI corresponds to the second CSI corresponding to the second information, receiving the second CSI transmitted by the network device in response to the first CSI includes one or more of:
determining a channel corresponding to the second CSI based on the information of the channel where the second CSI is transmitted, and receiving the second CSI at a resource position corresponding to the channel;
determining a transmission occasion of the second CSI based on the transmission occasion corresponding to the second CSI, and receiving the second CSI at a time corresponding to the transmission occasion;
determining a time domain and/or frequency domain position where the second CSI is transmitted based on the model information corresponding to the second CSI, and receiving the second CSI based on the time domain and/or frequency domain position where the second CSI is transmitted;
determining the association relationship between the first CSI and the second CSI based on the model information corresponding to the second CSI, and receiving the second CSI based on the association relationship between the first CSI and the second CSI.

Optionally, the method further includes one or more of:
determining one or more of the second CSI corresponding to the first CSI and a target object corresponding to the first CSI, based on one or more of: the information indicating the first information corresponding to the second CSI, the third indication information, the fourth indication information, the fifth indication information, the sixth indication information, the seventh indication information, the eighth indication information, and the ninth indication information;
determining one or more of the first CSI corresponding to the second CSI and a target object corresponding to the second CSI, based on one or more of: the information indicating the first information corresponding to the second CSI, the third indication information, the fourth indication information, the fifth indication information, the sixth indication information, the seventh indication information, the eighth indication information, and the ninth indication information;
determining third CSI corresponding to the second CSI based on one or more of: the information indicating the first information corresponding to the second CSI, the third indication information, the fourth indication information, the fifth indication information, the sixth indication information, the seventh indication information, the eighth indication information, and the ninth indication information, where the third CSI is channel information corresponding to the first CSI;
determining the second CSI corresponding to the third CSI based on one or more of: the information indicating the first information corresponding to the second CSI, the third indication information, the fourth indication information, the fifth indication information, the sixth indication information, the seventh indication information, the eighth indication information, and the ninth indication information, where the third CSI is channel information corresponding to the first CSI.

Optionally, pre-agreeing with the network device on the association relationship between the second CSI and the first CSI includes one or more of:
the second CSI corresponding to the first CSI is: the M-th second CSI after the terminal sends the first CSI and receives first Downlink Control Information (DCI), where M is an integer greater than or equal to 1, the first DCI is DCI for scheduling a PUSCH having a same Hybrid Automatic Repeat Request Identifier (HARQ ID) as a first Physical Uplink Shared Channel (PUSCH), and the first PUSCH is the PUSCH carrying the first CSI;
the second CSI corresponding to the first CSI is: the first second CSI after the terminal sends the first CSI and receives the first DCI, where the first CSI is DCI for scheduling a PUSCH having a same resource identifier as the first PUSCH, and the first PUSCH is the PUSCH where the first CSI is transmitted;
N pieces of simultaneously transmitted second CSI have a one-to-one correspondence with N pieces of most recent first CSI before transmitting the second CSI, where N is an integer greater than or equal to 1;
N pieces of simultaneously transmitted second CSI have a one-to-one correspondence with N pieces of first CSI satisfying a preset time requirement before transmitting the second CSI, where N is an integer greater than or equal to 1;
N pieces of simultaneously transmitted second CSI are ordered based on target information corresponding to the first CSI corresponding to the N pieces of second CSI, where N is an integer greater than or equal to 1;
pre-agreeing with the network device on an ordering manner of the second CSI in data or signaling carrying the second CSI.

Optionally, the target information includes one or more of:
model information;
time sequence;
CSI report information;
reference signal resource information;
reference signal resource set information.

Optionally, the second indication information includes one or more of:
tenth indication information, where the tenth indication information is used to indicate an identifier of the first CSI;
eleventh indication information, where the eleventh indication information is used to indicate resource information of the second CSI corresponding to the first CSI;
twelfth indication information, where the twelfth indication information is used to indicate channel-related information corresponding to the second CSI corresponding to the first CSI;
thirteenth indication information, where the thirteenth indication information is used to indicate model information corresponding to the second CSI corresponding to the first CSI.

Optionally, evaluating the performance of the first model and/or the first method based on the second CSI includes:
calculating a performance metric based on the second CSI;
evaluating the performance of the first model and/or the first method based on the performance metric.

Optionally, calculating the performance metric based on the second CSI includes:
calculating the performance metric based on third CSI and the second CSI; or
obtaining an equivalent channel based on a raw channel corresponding to the first CSI and the second CSI, and calculating the performance metric based on the equivalent channel; or
calculating a first performance metric corresponding to the third CSI and a second performance metric corresponding to the second CSI respectively, where the performance metric includes the first performance metric and the second performance metric;
the third CSI is channel information determined based on a downlink reference signal corresponding to the first CSI, or the third CSI is input information of a second model, or the third CSI is CSI for obtaining input information of the second model, and the second model is used to determine the first CSI.

Optionally, the performance metric includes one or more of:
an accuracy metric;
a system performance metric;
a metric corresponding to a distribution;
a channel quality-related metric.

Optionally, transmitting the first Channel State Information (CSI) to the network device includes:
determining the first CSI based on the first model or a second model;
transmitting the first CSI to the network device;
the first model and the second model have an association relationship.

Optionally, the method further includes one or more of:
the second CSI is obtained based on the second model, and the first CSI is used as an input to the second model;
the second CSI is obtained by using the resulting data of de-quantizing or pre-processing the first CSI as an input to the second model and utilizing the second model;
the second CSI is an output of the second model;
the second CSI is obtained by post-processing the output of the second model;
the second CSI is obtained based on the first model, and the first CSI is used as an input to the first model;
the second CSI is obtained by using the resulting data of de-quantizing or pre-processing the first CSI as an input to the first model and utilizing the second model;
the second CSI is an output of the first model;
the second CSI is obtained by post-processing the output of the first model;
the second model and the first model have an association relationship.

Optionally, the association relationship between the first model and the second model includes one or more of:
a dataset used to train the first model has an association relationship with a dataset used to train the second model;
the first model and the second model have a same model identifier;
the first model and the second model are obtained through joint training;
configurations corresponding to the first model and the second model are at least partially the same.

Optionally, the configuration includes one or more of:
antenna configuration, CSI Reference Signal (CSI-RS) resource configuration, CSI reporting configuration, CSI-RS resource set configuration, resource configuration.

Optionally, the second CSI includes one or more of:
precoding matrix information, layer number information, eigenvector, full channel information.

Optionally, the target object includes at least one of:
third CSI corresponding to the first CSI;
the first model;
a second model corresponding to the first model;
the first method.

Optionally, the method further includes:
obtaining information of the first model, where the information of the first model is obtained through one or more of:
obtained in a predefined manner;
obtained from the network device;
obtained through higher layer signaling.

A second aspect of the embodiments of the present disclosure provides an information processing method applied to a network device, including:
receiving first CSI transmitted by a terminal;
transmitting second CSI to the terminal in response to the first CSI;
the second CSI is used to evaluate performance of a first model and/or a first method, the first model is a model used for determining CSI, and the first method is a method for determining and/or feeding back CSI.

Optionally, the method further includes:
obtaining the association relationship between the second CSI and the first CSI based on the association relationship between the second CSI and a target object; or
obtaining the association relationship between the second CSI and the target object based on the association relationship between the second CSI and the first CSI.

Optionally, transmitting the second CSI to the terminal includes:
transmitting the second CSI to the terminal based on the association relationship between the second CSI and the first CSI; or
transmitting the second CSI to the terminal based on the association relationship between the second CSI and the target object.

Optionally, the method further includes any one of:
transmitting first indication information to the terminal, where the first indication information is used to indicate the association relationship between the second CSI and the first CSI and/or the association relationship between the second CSI and the target object;
pre-agreeing with the terminal on the association relationship between the second CSI and the first CSI and/or the association relationship between the second CSI and the target object;
receiving second indication information transmitted by the terminal, and obtaining the association relationship between the second CSI and the target object based on the second indication information, where the second indication information is used to indicate the association relationship between the second CSI and the first CSI and/or the association relationship between the second CSI and the target object.

Optionally, the first indication information includes one or more of:
information indicating first information corresponding to the second CSI, where the first information includes one or more of: an identifier of a reference signal and/or a transmission occasion of the reference signal, an identifier of a reference signal resource and/or a transmission occasion of the reference signal resource, an identifier of a reference signal resource set and/or a transmission occasion of the reference signal resource set, a reference signal resource configuration, a reference resource configuration;
third indication information, where the third indication information is used to indicate an association relationship between the second CSI and CSI report configuration information, and/or used to indicate an association relationship between the second CSI and time domain resource information and/or frequency domain resource information of a CSI report;
fourth indication information, where the fourth indication information is used to indicate channel-related information corresponding to the second CSI;
fifth indication information, where the fifth indication information is used to indicate an identifier of a model corresponding to the second CSI;
sixth indication information, where the sixth indication information is used to indicate a time offset between a transmission occasion of the first CSI and a transmission occasion of the second CSI;
seventh indication information, where the seventh indication information is used to indicate an association relationship between the second CSI and a model;
eighth indication information, where the eighth indication information is used to indicate an ordering manner of the second CSI in data or signaling carrying the second CSI;
ninth indication information, where the ninth indication information is used to indicate second information corresponding to the first CSI, where the second information includes one or more of:
information of a channel where the second CSI is transmitted;
resource information corresponding to the second CSI;
a transmission occasion corresponding to the second CSI;
model information corresponding to the second CSI.

Optionally, the association relationship between the second CSI and the first CSI includes one or more of:
the second CSI corresponds to the first CSI corresponding to the first information;
the second CSI corresponds to the first CSI satisfying a first condition and corresponding to the first information;
the second CSI corresponds to the first CSI corresponding to the third indication information;
the second CSI corresponds to the first CSI satisfying a second condition and corresponding to the third indication information;
the second CSI corresponds to the first CSI corresponding to the fourth indication information;
a model identifier corresponding to the first CSI corresponds to a model identifier corresponding to the second CSI;
a time offset between the transmission occasion of the first CSI and the transmission occasion of the second CSI is related to the time offset indicated by the sixth indication information;
the first CSI corresponds to the model corresponding to the second CSI;
the second CSI corresponds to the first CSI corresponding to the order of the second CSI;
the second CSI corresponds to a CSI report of the first CSI corresponding to the order of the second CSI;
the first CSI corresponds to the second CSI corresponding to the second information.

Optionally, in a case where the first CSI corresponds to the second CSI corresponding to the second information, transmitting the second CSI to the terminal includes one or more of:
determining a channel corresponding to the second CSI based on the information of the channel where the second CSI is transmitted, and transmitting the second CSI at a resource position corresponding to the channel;
determining a transmission occasion of the second CSI based on the transmission occasion corresponding to the second CSI, and transmitting the second CSI at a time corresponding to the transmission occasion;
determining a time domain and/or frequency domain position where the second CSI is transmitted based on the model information corresponding to the second CSI, and transmitting the second CSI based on the time domain and/or frequency domain position where the second CSI is transmitted;
determining the association relationship between the first CSI and the second CSI based on the model information corresponding to the second CSI, and transmitting the second CSI based on the association relationship between the first CSI and the second CSI.

Optionally, the method further includes one or more of:
determining one or more of the second CSI corresponding to the first CSI, transmission parameters of the second CSI corresponding to the first CSI, and a target object corresponding to the first CSI;
determining a target object corresponding to the second CSI;
determining third CSI corresponding to the second CSI, where the third CSI is channel information corresponding to the first CSI;
determining transmission parameters of the second CSI corresponding to the third CSI, where the third CSI is channel information corresponding to the first CSI;
the transmission parameters include parameters for transmitting the second CSI.

Optionally, the second indication information includes one or more of:
tenth indication information, where the tenth indication information is used to indicate an identifier of the first CSI;
eleventh indication information, where the eleventh indication information is used to indicate resource information of the second CSI corresponding to the first CSI;
twelfth indication information, where the twelfth indication information is used to indicate channel-related information corresponding to the second CSI corresponding to the first CSI;
thirteenth indication information, where the thirteenth indication information is used to indicate model information corresponding to the second CSI corresponding to the first CSI.

Optionally, the method further includes:
determining one or more of the following based on one or more of the tenth indication information, the eleventh indication information, the twelfth indication information, and the thirteenth indication information:
the second CSI;
the association relationship between the first CSI and the second CSI;
time domain and/or frequency domain resources for transmitting the second CSI;
channel parameters for transmitting the second CSI.

Optionally, pre-agreeing with the terminal on the association relationship between the second CSI and the first CSI and/or the association relationship between the second CSI and the target object includes one or more of:
the second CSI corresponding to the first CSI is: the M-th second CSI after the terminal sends the first CSI and receives first Downlink Control Information (DCI), where M is an integer greater than or equal to 1, the first DCI is DCI for scheduling a PUSCH having a same Hybrid Automatic Repeat Request Identifier (HARQ ID) as a first Physical Uplink Shared Channel (PUSCH), and the first PUSCH is the PUSCH carrying the first CSI;
the second CSI corresponding to the first CSI is: the first second CSI after the terminal sends the first CSI and receives the first DCI, where the first CSI is DCI for scheduling a PUSCH having a same resource identifier as the first PUSCH, and the first PUSCH is the PUSCH where the first CSI is transmitted;
N pieces of simultaneously transmitted second CSI have a one-to-one correspondence with N pieces of most recent first CSI before transmitting the second CSI, where N is an integer greater than or equal to 1;
N pieces of simultaneously transmitted second CSI have a one-to-one correspondence with N pieces of first CSI satisfying a preset time requirement before transmitting the second CSI, where N is an integer greater than or equal to 1;
N pieces of simultaneously transmitted second CSI are ordered based on target information corresponding to the first CSI corresponding to the N pieces of second CSI, where N is an integer greater than or equal to 1;
pre-agreeing with the terminal on an ordering manner of the second CSI in data or signaling carrying the second CSI.

Optionally, the target information includes one or more of:
model information;
time sequence;
CSI report information;
reference signal resource information;
reference signal resource set information.

Optionally, transmitting the second CSI to the terminal includes one or more of:
determining a channel where the second CSI is transmitted based on channel information where the second CSI is transmitted, and transmitting the second CSI at a resource position corresponding to the channel;
determining a transmission occasion of the second CSI based on a transmission occasion corresponding to the second CSI, and transmitting the second CSI at a time corresponding to the transmission occasion;
determining a time domain and/or frequency domain position where the second CSI is transmitted based on model information corresponding to the second CSI, and transmitting the second CSI according to the time domain and/or frequency domain position where the second CSI is transmitted;
determining an association relationship between the first CSI and the second CSI based on model information corresponding to the second CSI, and transmitting the second CSI according to the association relationship between the first CSI and the second CSI;
determining the second CSI based on the first model or a second model, and transmitting the second CSI, where the first model and the second model have an association relationship.

Optionally, the second CSI is determined in one or more of the following ways:
using the first CSI as input to the first model and utilizing the first model to obtain the second CSI, or using the first CSI as input to a second model and utilizing the second model to obtain the second CSI;
using the resulting data of de-quantizing or pre-processing the first CSI as an input to the first model and utilizing the first model to obtain the second CSI, or using the resulting data of de-quantizing or pre-processing the first CSI as an input to the second model and utilizing the second model to obtain the second CSI;
using an output of the first model or the second model as the second CSI;
the second CSI is obtained by post-processing the output of the first model or the second model.

Optionally, the association relationship between the first model and the second model includes one or more of:
a dataset used to train the first model has an association relationship with a dataset used to train the second model;
the first model and the second model have a same model identifier;
the first model and the second model are obtained through joint training;
configurations corresponding to the first model and the second model are at least partially the same.

Optionally, the configuration includes one or more of:
antenna configuration, CSI-RS resource configuration, CSI reporting configuration, CSI-RS resource set configuration, resource configuration.

Optionally, transmitting the second CSI to the terminal includes:
transmitting one or more pieces of second CSI to the terminal through a PDSCH.

Optionally, the target object includes at least one of:
third CSI corresponding to the first CSI;
the first model;
a second model corresponding to the first model;
the first method.

A third aspect of the embodiments of the present disclosure provides an information processing device applied to a terminal, including:
a first transmitting unit, used for sending first CSI to a network device;
a first receiving unit, used for receiving second CSI transmitted by the network device in response to the first CSI;
a first processing unit, used for evaluating performance of a first model and/or a first method based on the second CSI, where the first model is a model used for determining CSI, and the first method is a method for determining and/or feeding back CSI.

A fourth aspect of the embodiments of the present disclosure provides an information processing device applied to a network device, including:
a first receiving unit, used for receiving first CSI transmitted by a terminal;
a first transmitting unit, used for sending second CSI to the terminal in response to the first CSI;
the second CSI is used to evaluate performance of a first model and/or a first method, the first model is a model used for determining CSI, and the first method is a method for determining and/or feeding back CSI.

A fifth aspect of the embodiments of the present disclosure provides an information processing device applied to a terminal, including: a memory, a transceiver, a processor:
the memory is configured to store a computer program;
the transceiver is configured to transmit and receive data under control of the processor;
the processor is configured to read the computer program in the memory and execute the following operations:
transmitting first CSI to a network device;
receiving second CSI transmitted by the network device in response to the first CSI;
evaluating performance of a first model and/or a first method based on the second CSI, where the first model is a model used for determining CSI, and the first method is a method for determining and/or feeding back CSI.

A sixth aspect of the embodiments of the present disclosure provides an information processing device applied to a network device, including: a memory, a transceiver, a processor:
the memory is configured to store a computer program;
the transceiver is configured to transmit and receive data under control of the processor;
the processor is configured to read the computer program in the memory and execute the following operations:
receiving first CSI transmitted by a terminal;
transmitting second CSI to the terminal in response to the first CSI;
the second CSI is used for evaluating a performance of a first model and/or a first method, the first model is a model for determining CSI, and the first method is a method for determining and/or feeding back CSI.

A seventh aspect of the embodiments of the present disclosure provides a processor-readable storage medium, storing a computer program, where the computer program is used to cause the processor to execute the method hereinabove.

In the present disclosed embodiment, the performance of the first model and/or the first method may be evaluated based on the first CSI and the second CSI, thereby avoiding complex calculations and improving the efficiency of performance monitoring.

### BRIEF DESCRIPTION OF THE DRAWINGS

Figure 1 is a schematic diagram of a bilaterally deployed model for CSI compression;
Figure 2 is a first flowchart of an information processing method according to an embodiment of the present disclosure;
Figure 3 is a second flowchart of an information processing method according to an embodiment of the present disclosure;
Figure 4 is a third flowchart of an information processing method according to an embodiment of the present disclosure;
Figure 5 is a first structural diagram of an information processing device according to an embodiment of the present disclosure;
Figure 6 is a second structural diagram of an information processing device according to an embodiment of the present disclosure;
Figure 7 is a third structural diagram of an information processing device according to an embodiment of the present disclosure; and
Figure 8 is a fourth structural diagram of an information processing device according to an embodiment of the present disclosure.

### DETAILED DESCRIPTION

The term "and/or" in the embodiments of the present disclosure describes the association relationship of associated objects, indicating that three relationships may exist. For example, A and/or B may indicate: A exists alone, A and B exist simultaneously, or B exists alone. The character "/" generally indicates that the associated objects before and after it are in an "or" relationship.

The term "plurality" in the embodiments of the present disclosure refers to two or more, and other quantifiers are similar.

The technical solutions in the embodiments of the present disclosure will be described clearly and completely below with reference to the accompanying drawings in the embodiments of the present disclosure. Obviously, the described embodiments are only a part of the embodiments of the present disclosure, not all of them. Based on the embodiments in the present disclosure, all other embodiments obtained by those of ordinary skill in the art without creative efforts shall fall within the protection scope of the present disclosure.

As mentioned above, the calculation method for Intermediate KPI in the related art is relatively cumbersome, affecting the efficiency of performance monitoring for AI/ML models or methods. Furthermore, in the related art, since AI/ML models are obtained through data training, and wireless communication systems are complex and variable, it cannot be guaranteed that CSI compression feedback algorithms based on AI/ML models always have good performance. Therefore, it is necessary to evaluate or monitor the performance of AI/ML models so that when an AI/ML model does not match (or is not adapted to) the current scenario, the current AI/ML model or the CSI feedback method based on the AI/ML model can be discontinued. However, the related art lacks a complete method for evaluating CSI feedback methods or AI/ML models.

Based on the above technical problems, the embodiments of the present disclosure provide an information processing method and device to improve the efficiency of performance monitoring.

The method and device are based on the same inventive concept. Since the principles for solving the problems are similar, the implementation of the device and the method can be cross-referenced, and repeated descriptions will not be provided.

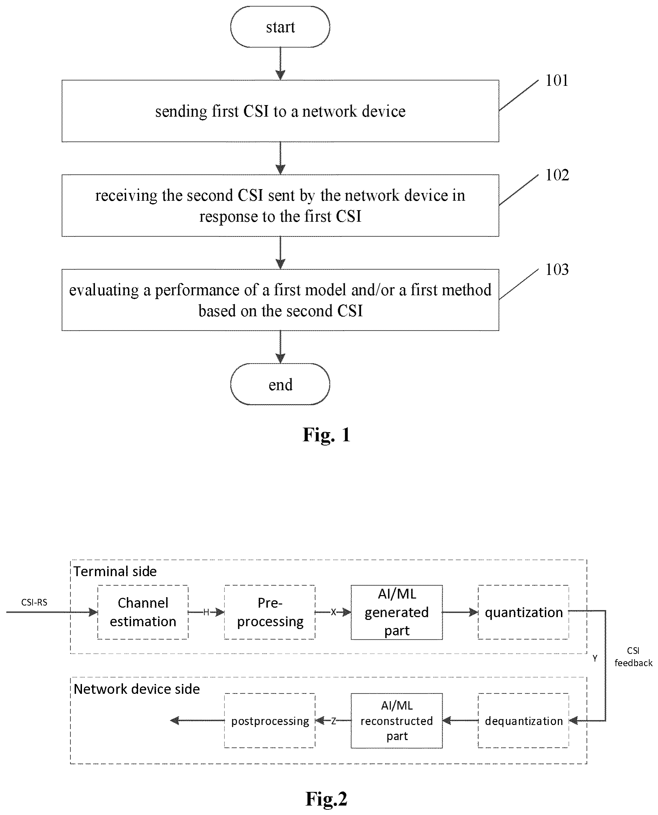

Referring to FIG. 1, FIG. 1 is a flowchart of an information processing method according to an embodiment of the present disclosure, applied to a terminal. As shown in FIG. 1, the method includes the following steps:
Step 101: transmitting first CSI to a network device.

The network device may be a base station, etc.

The first CSI may include information characterizing (or indicating) one or more of the following: precoding matrix information, layer number information, an eigenvector, or full channel information (time-domain channel, frequency-domain channel, etc.). The first CSI may be sent via a PUSCH (Physical Uplink Shared Channel) or a PUCCH (Physical Uplink Control Channel).

The first CSI may be determined based on a first model or based on a second model. The first model may be a terminal-side model, a network device-side model (e.g., base station side), or simultaneously include terminal-side and base station-side models. Correspondingly, the second model may be a base station-side model, a terminal-side model, or simultaneously include terminal-side and base station-side models. Optionally, in this embodiment of the present disclosure, the terminal may also obtain information of the first model, where the information of the first model is obtained by one or more of:
obtained in a predefined manner;
obtained from the network device;
obtained through higher layer signaling.
the information of the first model may include, for example, model parameters, identifiers, etc.

It should be noted that the models involved in the embodiments of the present disclosure include, but are not limited to, AI models, ML models, neural network models, data-driven technology models, etc.

For example, in this step, the terminal may determine the first CSI based on the first model and send the first CSI to the network device. In this case, the second CSI transmitted by the network device in response to the first CSI may include: the second CSI determined by the network device based on a second model and the first CSI. where the first model and the second model have an association relationship (also called a correspondence), meaning the first model and the second model correspond to each other. That is, the first model is deployed on the terminal, and the second model is deployed on the network device.

As another example, in this step, the terminal may determine the first CSI based on the second model and send the first CSI to the network device. In this case, the second CSI transmitted by the network device in response to the first CSI may include: the second CSI determined by the network device based on the first model and the first CSI. where the first model and the second model have an association relationship (also called a correspondence), meaning the first model and the second model correspond to each other. That is, the second model is deployed on the terminal, and the first model is deployed on the network device.

The association relationship between the first model and the second model described above may be one-to-one (one first model corresponds to one second model), one-to-many (one first model corresponds to multiple second models), many-to-one (multiple first models correspond to one second model), or many-to-many (multiple first models correspond to multiple second models). Optionally, it includes one or more of the following:

The dataset used to train the first model has an association relationship with the dataset used to train the second model; e.g., the same dataset, or the training set used by one model is a dataset inferred based on the other model or a model corresponding to the other model, or the training set used by one model includes data inferred based on the other model. For example, the training dataset used by the network device to train the first model is determined by the terminal based on the second model/a model corresponding to the second model and transmitted to the network device; or, the training dataset used by the terminal to train the second model is determined by the network device based on the first model/a model corresponding to the first model and transmitted to the terminal;

The first model and the second model have the same model identifier;

The first model and the second model are obtained through joint training;

The configurations corresponding to the first model and the second model are at least partially the same.
the configuration includes one or more of the following: antenna configuration, CSI-RS (CSI Reference Signal) resource configuration, CSI reporting configuration, CSI-RS resource set configuration, resource configuration. This embodiment does not limit the method of transmitting the first CSI.

As shown in FIG. 2, it illustrates a common communication flowchart for a bilateral deployment of an AI model for CSI feedback on the terminal side and the network side:

On the terminal side: compress raw channel information or preprocessed channel information using the terminal-side AI/ML model (also called the CSI generation part, or AI/ML encoder, etc.), quantize the compressed result into binary bits, and feed it back to the base station.

On the network side (i.e., network device side, base station side): dequantize the binary bits fed back by the terminal, then use the base station-side AI/ML model (also called the CSI reconstruction part, etc., or AI/ML decoder, etc.) to recover the channel information.

Step 102: receiving the second CSI transmitted by the network device in response to the first CSI.

The second CSI may include one or more of the following: precoding matrix information, layer number information, an eigenvector, or full channel information (time-domain channel, frequency-domain channel, etc.). The second CSI is transmitted by the network device via a PDSCH (Physical Downlink Shared Channel). Correspondingly, the terminal receives the second CSI transmitted by the network device via the PDSCH.

**In** this embodiment, the second CSI is CSI sent in response to the first CSI. It can be understood that the second CSI is CSI determined based on the first CSI; for example, the second CSI is CSI obtained by processing the first CSI; it can also be understood that there is an association relationship between the second CSI and the first CSI; it can also be understood that the second CSI is determined based on a second model that has an association relationship with the first model used to determine the first CSI; it can also be understood that the transmission parameters of the first CSI and the transmission parameters of the second CSI have an association relationship; it can also be understood that the transmission parameters of the reference signal corresponding to the first CSI and the transmission parameters of the second CSI have an association relationship; it can also be understood that the first CSI can trigger the network device to determine, send, etc., the second CSI.

A specific example is: the terminal determines the first CSI based on an AI model, and the network device determines the second CSI based on the first CSI and another AI model corresponding to the terminal-side AI model (i.e., another model having an association relationship with the terminal-side AI model). For example, the terminal may determine the first CSI based on the first model (e.g., the terminal-side AI/ML model in FIG. 2) and send the first CSI to the network device. At this time, the network device determines the second CSI based on a second model corresponding to the first model (e.g., the network device-side AI/ML model in FIG. 2) and the first CSI. For another example, the terminal may determine the first CSI based on the second model (e.g., the network device-side AI/ML model in FIG. 2) and send the first CSI to the network device. At this time, the network device determines the second CSI based on a first model corresponding to the second model (e.g., the terminal-side AI/ML model in FIG. 2) and the first CSI.

Optionally, in the association relationship between the first CSI and the second CSI, each second CSI corresponds to at least one first CSI. For example, one second CSI corresponds to one first CSI (i.e., the first CSI and the second CSI have a one-to-one correspondence; correspondingly, the network device sends one second CSI to the terminal for one first CSI, and the terminal receives one second CSI); or multiple second CSI correspond to one first CSI (e.g., different second CSI correspond to different models; correspondingly, the network device sends multiple second CSI to the terminal for one first CSI, and the terminal receives multiple second CSI); or one second CSI corresponds to multiple first CSI.

The second CSI is determined based on the first CSI, which may include: in the case where the first CSI is obtained based on the first model, the second CSI is obtained based on the second model; or, in the case where the first CSI is obtained based on the second model, the second CSI is obtained based on the first model. Specifically, it may include one or more of the following:
the second CSI is obtained by using the first CSI as input to the second model and utilizing the second model (e.g., performing inference);
the second CSI is obtained by dequantizing or preprocessing (e.g., truncating, zero-padding, etc.) the first CSI, using it as input to the second model, and utilizing the second model;
the second CSI is the output of the second model;
the second CSI is obtained by processing the output of the second model; for example, the second CSI is the precoding matrix corresponding to the output of the second model; or the second CSI is the information obtained by quantizing the output of the second model;
the second CSI is obtained based on the first model, and the first CSI is used as an input to the first model;
the second CSI is obtained by dequantizing or preprocessing (e.g., truncating, zero-padding, etc.) the first CSI, using it as input to the first model, and utilizing the second model;
the second CSI is the output of the first model;
the second CSI is obtained by processing the output of the first model; for example, the second CSI is the precoding matrix corresponding to the output of the first model; or the second CSI is the information obtained by quantizing the output of the first model.

The second model and the first model have an association relationship. The explanation of this association relationship is as described earlier.

Optionally, the method may further include: obtaining an association relationship between the second CSI and the first CSI based on an association relationship between the second CSI and a target object; or, obtaining an association relationship between the second CSI and the target object based on the association relationship between the second CSI and the first CSI.

The target object includes at least one of the following: third CSI corresponding to the first CSI; the first model; a second model corresponding to the first model; the first method. Optionally, the third CSI is channel information corresponding to the first CSI.

Correspondingly, the association relationship between the second CSI and the target object may include an association relationship between the second CSI and at least one item among the information included in the target object described above.

Optionally, in this step, the terminal may receive the second CSI based on the association relationship between the second CSI and the first CSI; or, receive the second CSI based on the association relationship between the second CSI and the target object.

For example, during the reception of the second CSI, the transmission parameters of the second CSI can be determined based on the association relationship between the second CSI and the first CSI or based on the association relationship between the second CSI and the target object, and the second CSI is received based on these transmission parameters. where the transmission parameters include parameters of the channel used to transmit the second CSI, parameters for transmitting the second CSI, etc., such as the location of the channel carrying the second CSI, the field within the signaling carrying the second CSI, etc.

In this embodiment, the association relationship between the first CSI and the second CSI, and/or the association relationship between the second CSI and the target object, may be pre-agreed between the network device and the terminal, or indicated by the network device to the terminal, or indicated by the terminal to the network device.

Correspondingly, the method may further include any one of the following:
(1) Receive first indication information transmitted by the network device, and obtain an association relationship between the second CSI and the target object based on the first indication information, where the first indication information is used for indicating the association relationship between the second CSI and the first CSI and/or the association relationship between the second CSI and the target object.

The first indication information includes one or more of the following:
S1: Information indicating first information corresponding to the second CSI; where the first information includes one or more of: an identifier (e.g., ID) of a reference signal and/or a transmission occasion of a reference signal, an identifier of a reference signal resource and/or a transmission occasion of a reference signal resource, an identifier (e.g., ID) of a reference signal resource set and/or a transmission occasion of a reference signal resource set, a reference signal resource configuration, or a reference resource configuration.

Correspondingly, in this case, the second CSI corresponds to the first CSI corresponding to the first information. Or, the second CSI corresponds to the first CSI satisfying a first condition and corresponding to the first information. where the first condition can be set as needed. That is, the first CSI may be determined based on one or more of: an identifier (e.g., ID) of a reference signal and/or a transmission occasion of a reference signal, an identifier of a reference signal resource and/or a transmission occasion of a reference signal resource, an identifier (e.g., ID) of a reference signal resource set and/or a transmission occasion of a reference signal resource set, a reference signal resource configuration, or a reference resource configuration.

For example, if the first information includes a reference signal identifier, the second CSI corresponds to the first CSI corresponding to that reference signal identifier. In this case, the first CSI is determined based on the reference signal corresponding to the reference signal identifier.

For example, the second CSI corresponds to the M-th most recent reference signal/reference signal resource set corresponding to the above information indicated by the network device to the terminal before transmitting the second CSI (M is an integer greater than or equal to 1). where the first condition is a time condition, meaning that the first CSI corresponding to the second CSI and the second CSI satisfy a certain time requirement.

S2: Third indication information, where the third indication information is used for indicating an association relationship between the second CSI and CSI report configuration information, and/or, used for indicating an association relationship between the second CSI and time domain resource information and/or frequency domain resource information (e.g., transmission occasion) of a CSI report.

For example, the third indication information indicates the CSI report configuration information and/or the transmission occasion of the CSI report corresponding to the second CSI.

A possible implementation is that the CSI report configuration information and/or the time and/or frequency domain resource information of the CSI report corresponding to the first CSI corresponding to the second CSI is the same as the CSI report configuration information and/or the time and/or frequency domain resource information of the CSI report indicated by the network device for the second CSI.

Correspondingly, in this case, the second CSI corresponds to the first CSI corresponding to the third indication information; or, the second CSI corresponds to the first CSI satisfying a second condition and corresponding to the third indication information. where the second condition can be set as needed.

For example, the second CSI corresponds to the M-th most recent first CSI corresponding to the above information indicated by the network device to the terminal before transmitting the second CSI (M is an integer greater than or equal to 1). where the second condition is a time condition, meaning that the first CSI corresponding to the second CSI and the second CSI satisfy a certain time requirement.

For the method where the base station indicates the CSI report configuration information and/or transmission occasion of the first CSI corresponding to the second CSI, optionally, the base station indicates that the first CSI corresponding to the second CSI is the P-th (P is an integer greater than or equal to 0) first CSI before transmitting the second CSI.

If the third indication information indicates the transmission occasion of the CSI report corresponding to the second CSI, this third indication information may indicate that the first CSI corresponding to the second CSI is the X-th (X is an integer greater than or equal to 0) first CSI before transmitting the second CSI.

S3: Fourth indication information, where the fourth indication information is used for indicating channel-related information corresponding to the second CSI.

For example, the fourth indication information may indicate channel-related information corresponding to the first CSI corresponding to the second CSI, such as HARQ ID (Hybrid automatic repeat request ID), scrambling information, Resource ID, etc. of the channel corresponding to the first CSI.

For example, the channel-related information corresponding to the channel carrying the first CSI corresponding to the second CSI is the same as the channel-related information corresponding to the channel carrying the second CSI. The channel-related information can be HARQ ID, etc.

Correspondingly, in this case, the second CSI corresponds to the first CSI corresponding to the fourth indication information. The first CSI corresponding to the second CSI includes: the first CSI corresponding to the channel-related information corresponding to the second CSI.

S4: Fifth indication information, where the fifth indication information is used for indicating an identifier of the model corresponding to the second CSI.

Correspondingly, in this case, the model identifier corresponding to the first CSI corresponds to the model identifier corresponding to the second CSI; for example, they are the same, etc. For example, the first CSI corresponding to the second CSI is the first CSI generated by a model having the same model ID as the model corresponding to the second CSI; the first CSI corresponding to the second CSI is the first CSI generated by a second model corresponding to that model ID.

S5: Sixth indication information, where the sixth indication information is used for indicating a time offset between a transmission occasion of the first CSI and a transmission occasion of the second CSI.

Correspondingly, in this case, the time offset between the transmission occasion of the first CSI and the transmission occasion of the second CSI is related to the time offset indicated by the sixth indication information. For example, the time offset between the transmission occasion of the first CSI and the transmission occasion of the second CSI is equal to the time offset indicated by the sixth indication information; or, the time offset between the transmission occasion of the first CSI and the transmission occasion of the second CSI differs from the time offset indicated by the sixth indication information by N (N is an integer greater than or equal to 1) time units.

It should be noted that the methods in S1-S5 above can be used independently, or one or more of them can be used in combination. The indication information in S1-S5 above may be transmitted by the network device simultaneously with or at a different time from the second CSI. Correspondingly, the indication information in S1-S5 above may be received together with the second CSI, or not together with the second CSI, but the second CSI has an agreed (e.g., protocol-agreed) association relationship with the above information.

S6: Seventh indication information, where the seventh indication information is used for indicating an association relationship between the second CSI and a model.

Correspondingly, in this case, the first CSI corresponds to the model corresponding to the second CSI. For example, if the seventh indication information indicates the first model corresponding to the second CSI, then the first CSI corresponding to the second model corresponding to that first model corresponds to that second CSI; for example, if the seventh indication information indicates the second model corresponding to the second CSI, then the first CSI corresponding to that second model corresponds to that second CSI; for example, if the seventh indication information indicates that the X-th second CSI corresponds to the Y-th model (X, Y are integers greater than or equal to 0), then the first CSI corresponding to the Y-th model is the first CSI corresponding to the second CSI.

S7: Eighth indication information, where the eighth indication information is used for indicating an ordering manner of the second CSI in data or signaling carrying the second CSI.

Correspondingly, in this case, the second CSI corresponds to the first CSI corresponding to the order of the second CSI; or, the second CSI corresponds to the CSI report of the first CSI corresponding to the order of the second CSI.

For example, the eighth indication information may indicate that the X-th second CSI corresponds to the Y-th (X, Y are integers greater than or equal to 0) first CSI; the eighth indication information may indicate that the M-th second CSI corresponds to the CSI report of the N-th (M, N are integers greater than or equal to 0) first CSI.

S8: Ninth indication information, where the ninth indication information is used for indicating second information corresponding to the first CSI, where the second information includes one or more of the following:
information of a channel where the second CSI is transmitted: e.g., may include HARQ ID, scrambling information, Resource ID, time-frequency resource allocation, channel ID, etc.;
resource information corresponding to the second CSI: e.g., time domain and/or frequency domain resources, signal resources, channel resources, etc.;
transmission occasion corresponding to the second CSI;
model information corresponding to the second CSI, e.g., model ID, etc.

Correspondingly, in this case, the first CSI corresponds to the second CSI corresponding to the second information. The terminal may receive the second CSI in one or more of the following ways:
determining the channel corresponding to the second CSI based on the information of the channel where the second CSI is transmitted, and receive the second CSI at the resource position corresponding to that channel;
determining the transmission occasion of the second CSI based on the transmission occasion corresponding to the second CSI, and receive the second CSI at the time corresponding to that transmission occasion;
determining the time domain and/or frequency domain position where the second CSI is transmitted based on the model information corresponding to the second CSI, and receive the second CSI based on that time domain and/or frequency domain position;
determining the association relationship between the first CSI and the second CSI based on the model information corresponding to the second CSI, and receive the second CSI based on that association relationship.

Optionally, one or more indication information among the information indicating the first information corresponding to the second CSI, the third indication information, the fourth indication information, the fifth indication information, the sixth indication information, the seventh indication information, the eighth indication information, and the ninth indication information (S1-S9) is received simultaneously with or at a different time from the configuration information of the first CSI (e.g., report configuration information, resource configuration information of the first CSI). If received at a different time, the above indication information has an agreed (e.g., protocol-agreed) association relationship with the configuration information of the first CSI.

Optionally, based on the above embodiments, the method further includes one or more of the following:
based on one or more of the indication information in S1-S9, determining one or more of: the second CSI corresponding to the first CSI, or the target object corresponding to the first CSI;
based on one or more of the indication information in S1-S9, determining one or more of: the first CSI corresponding to the second CSI, or the target object corresponding to the second CSI;
based on one or more of the indication information in S1-S9, determining the third CSI corresponding to the second CSI, where the third CSI is the channel information corresponding to the first CSI; for example, the third CSI may be channel information determined based on a downlink reference signal corresponding to the first CSI;
based on one or more of the indication information in S1-S9, determining the second CSI corresponding to the third CSI, where the third CSI is the channel information corresponding to the first CSI; for example, the third CSI may be channel information determined based on a downlink reference signal corresponding to the first CSI.

The specific method for determining the target object in each case can refer to the description for determining the second CSI in S1-S9 above.

(2) Pre-agree with the network device on the association relationship between the second CSI and the first CSI and/or the association relationship between the second CSI and the target object.

In this embodiment, the terminal and the network device may pre-agree on one or more of the following:
L1: The second CSI corresponding to the first CSI is: the M-th second CSI after the terminal sends the first CSI and receives first DCI (Downlink Control Information), where M is an integer greater than or equal to 1, the first DCI is DCI for scheduling a PUSCH having the same HARQ ID (Hybrid Automatic Repeat Request Identifier) as a first PUSCH (Physical Uplink Shared Channel), and the first PUSCH is the PUSCH carrying the first CSI;
L2: The second CSI corresponding to the first CSI is: the first second CSI after the terminal sends the first CSI and receives the first DCI, where the first CSI is DCI for scheduling a PUSCH having the same resource identifier as the first PUSCH, and the first PUSCH is the PUSCH where the first CSI is transmitted;
L3: N pieces of simultaneously transmitted second CSI have a one-to-one correspondence with the N most recent first CSI before transmitting the second CSI, where N is an integer greater than or equal to 1;
L4: N pieces of simultaneously transmitted second CSI have a one-to-one correspondence with N first CSI satisfying a preset time requirement before transmitting the second CSI, where N is an integer greater than or equal to 1, and the preset time requirement may be protocol-agreed, or indicated by the network device, or determined based on terminal capability;
L5: N pieces of simultaneously transmitted second CSI are ordered based on target information corresponding to the first CSI corresponding to the N second CSI, where N is an integer greater than or equal to 1;
L6: Pre-agree with the network device on an ordering manner of the second CSI in data or signaling carrying the second CSI.

For example, it can be agreed that the X-th second CSI corresponds to the Y-th model (X, Y are integers greater than or equal to 0). Then, the first CSI corresponding to the Y-th model can be the first CSI corresponding to the X-th second CSI.

In L5 above, optionally, the target information includes one or more of the following:
model information;
time sequence;
CSI report information (e.g., CSI report configuration parameters, including: transmission resources, transmission occasions, etc.);
reference signal resource information;
reference signal resource set information

For example, N pieces of simultaneously transmitted second CSIs are ordered based on model IDs corresponding to first CSIs corresponding to the N second CSIs (e.g., ordered in ascending order of first model IDs; ordered in descending order of first model IDs, etc.); N pieces of simultaneously transmitted second CSIs are ordered based on time sequence of first CSIs corresponding to the N second CSIs (e.g., second CSI corresponding to first CSI with earlier transmission moment has more significant bits (higher bits), second CSI corresponding to first CSI with earlier transmission moment has less significant bits (lower bits)); N pieces of simultaneously transmitted second CSIs are ordered based on CSI report configuration parameters of first CSIs corresponding to the N second CSIs (e.g., ordered by time-frequency resource parameters, ordered by IDs, etc.); N pieces of simultaneously transmitted second CSIs are ordered based on reference signal resource configuration or resource set configuration corresponding to first CSIs corresponding to the N second CSIs (e.g., ordered by time-frequency resource parameters, ordered by IDs, etc.).

**In** embodiments of the present disclosure, the agreement between the network device and the terminal may be protocol-agreed, or indicated by the network device to the terminal, or determined based on capability of the terminal.

In embodiments of the present disclosure, the association relationship between the first CSI and the second CSI may be received together with indication information where the network device instructs the terminal to perform model monitoring.

(3) transmitting second indication information to the network device, where the second indication information is used to indicate the association relationship between the second CSI and the first CSI and/or the association relationship between the second CSI and a target object.

Optionally, the second indication information includes one or more of the following:
A1. Tenth indication information, where the tenth indication information is used to indicate an identifier (e.g., ID) of the first CSI, where first CSI and second CSI corresponding to the same identifier are associated; where the ID may be specifically used to indicate this association relationship, and may be HARQ ID, CORESET (Control Resource Set) ID, Resource ID, etc.;
A2. Eleventh indication information, where the eleventh indication information is used to indicate resource information of the second CSI corresponding to the first CSI, such as time domain and/or frequency domain resources, signal resources, channel resources, etc.; for example, indicating a transmission occasion of the second CSI corresponding to the first CSI; or for example, indicating a time offset between a channel corresponding to the first CSI and a channel corresponding to the second CSI (e.g., indicating time units between first CSI transmissions, or indicating the second CSI in the Q-th (Q is an integer greater than or equal to 0) time unit after the first CSI transmission, where the time unit may be symbol/slot/subframe/frame, etc.). This approach may also be understood as: the network device indicates to the terminal a time offset between a transmission occasion of the first CSI and a transmission occasion of the second CSI.
A3. Twelfth indication information, where the twelfth indication information is used to indicate channel-related information corresponding to the second CSI corresponding to the first CSI, such as HARQ ID, scrambling information, CORESET ID, Resource ID, etc. of the channel corresponding to the second CSI.
A4. Thirteenth indication information, where the thirteenth indication information is used to indicate model information (e.g., model ID) corresponding to the second CSI corresponding to the first CSI.

In this case, one possible approach is: when the terminal sends the first CSI, it carries a HARQ ID/scrambling information/CORESET ID/Resource ID, etc., and the second CSI corresponding to this HARQ ID/scrambling information/CORESET ID/Resource ID is the second CSI corresponding to the first CSI. Taking HARQ ID as an example, if a second CSI is transmitted on a channel with HARQ ID being the said HARQ ID, this second CSI is the second CSI corresponding to the first CSI.

A4. Thirteenth indication information, where the thirteenth indication information is used to indicate model information corresponding to the second CSI corresponding to the first CSI, such as model ID, etc.

In this case, the second CSI corresponding to this model is associated with the first CSI.

Optionally, the indication information in the above A1 to A4 may be transmitted to the network device simultaneously with the first CSI, or may not be transmitted simultaneously with the first CSI, but the first CSI and the said information have an agreed (e.g., protocol-agreed) association relationship (e.g., an agreed time domain relationship).

The above L3 to L8 may be used simultaneously with approaches (1) and (3). For example, multiple second CSIs are transmitted together on the same PDSCH, and the network device indicates to the terminal configuration information of first CSIs corresponding to the second CSIs. Then, the multiple second CSIs have a one-to-one correspondence with the most recent N first CSIs that meet certain time requirements before transmitting the second CSIs.

It should be noted that in embodiments of the present disclosure, in addition to directly indicating the association relationship between the first CSI and the second CSI, this association relationship may also be indicated indirectly. For example, indicating an association relationship between third CSI corresponding to the first CSI and the second CSI; indicating an association relationship between reference signals corresponding to the first CSI and the second CSI, etc.

Step 103: evaluating a performance of a first model and/or a first method based on the second CSI, where the first model is a model used to determine CSI, and the first method is a method for determining and/or feeding back CSI.

Correspondingly, in this step, terminal-side models, or base station-side models, or both terminal-side and base station-side models may be evaluated. The first model includes a model used to determine the first CSI, or the first model includes a model used to determine the second CSI, or the first model includes both a model used to determine the first CSI and a model used to determine the second CSI.

Correspondingly, evaluating performance of the first model and the first method in this step includes:
evaluating performance of the first model and/or the first method based on the second CSI and the association relationship between the second CSI and the first CSI; or evaluating performance of the first model and/or the first method based on the association relationship between the second CSI and a target object and the second CSI; where the target object has an association relationship with the first CSI. The explanation of the target object may refer to the foregoing description.

Specifically, this step may include: calculating a performance indicator based on the second CSI, and evaluating performance of the first model and/or the first method based on the performance indicator.

When calculating the performance indicator based on the second CSI, any of the following approaches may be included:
M1. Calculating the performance indicator based on third CSI and the second CSI.
M2. Obtaining an equivalent channel based on a raw channel corresponding to the first CSI and the second CSI, and calculating the performance indicator based on the equivalent channel; where the raw channel information may be channel information obtained by the terminal through channel estimation based on downlink reference signals; this processing may be preprocessing operations, which may include: time-domain windowing, noise suppression, SVD (Singular Value Decomposition), transforming the channel to angle-delay domain, etc.
M3. Calculating a first performance indicator corresponding to the third CSI and a second performance indicator corresponding to the second CSI respectively, where the performance indicator includes the first performance indicator and the second performance indicator. Optionally, the first performance indicator and the second performance indicator are performance indicators of the same type.

The third CSI is channel information determined based on downlink reference signals corresponding to the first CSI, or the third CSI is input information of a second model, or the third CSI is CSI used to obtain input information of the second model (e.g., processing the third CSI as input information of the second model), where the second model is used to determine the first CSI.

In approach M3, performance of the first model and/or the first method may be evaluated based on the relationship between the first performance indicator corresponding to the third CSI and the second performance indicator corresponding to the second CSI, such as magnitude relationship, difference, absolute value of difference, proportional relationship, etc.

For example, if the first performance indicator is greater than the second performance indicator, it indicates that performance of the first model and/or the first method is good, and/or if the first performance indicator is less than the second performance indicator, it indicates that performance of the first model and/or the first method is poor or not good; or for example, if the ratio of the first performance indicator to the second performance indicator is within a first value range, it indicates that performance of the first model and/or the first method is good, and/or if the ratio of the first performance indicator to the second performance indicator is within a second value range, it indicates that performance of the first model and/or the first method is poor or not good; or for example, if the difference or absolute value of difference between the first performance indicator and the second performance indicator is within a third value range, it indicates that performance of the first model and/or the first method is good, and/or if the difference or absolute value of difference between the first performance indicator and the second performance indicator is within a fourth value range, it indicates that performance of the first model and/or the first method is poor or not good.

The performance indicator includes one or more of the following:
accuracy indicators: SGCS (Squared Generalized Cosine Similarity), GCS (Generalized Cosine Similarity), NMSE (Normalized Mean Square Error), MSE (Mean Square Error), etc.;
system performance indicators: BLER (Block Error Rate), throughput, hypothetical BLER, hypothetical throughput, ACK (Acknowledgement), NACK (Negative Acknowledgement), etc.;
distribution-related indicators: mean, mean square error, etc.;
channel quality-related indicators: RSRP (Reference Signal Received Power), RSRQ (Reference Signal Received Quality), SINR (Signal-to-Interference-Noise Ratio), etc.

In embodiments of the present disclosure, performance of the first model and/or the first method may be evaluated based on the first CSI and the second CSI, thereby avoiding complex calculations and improving performance monitoring efficiency.

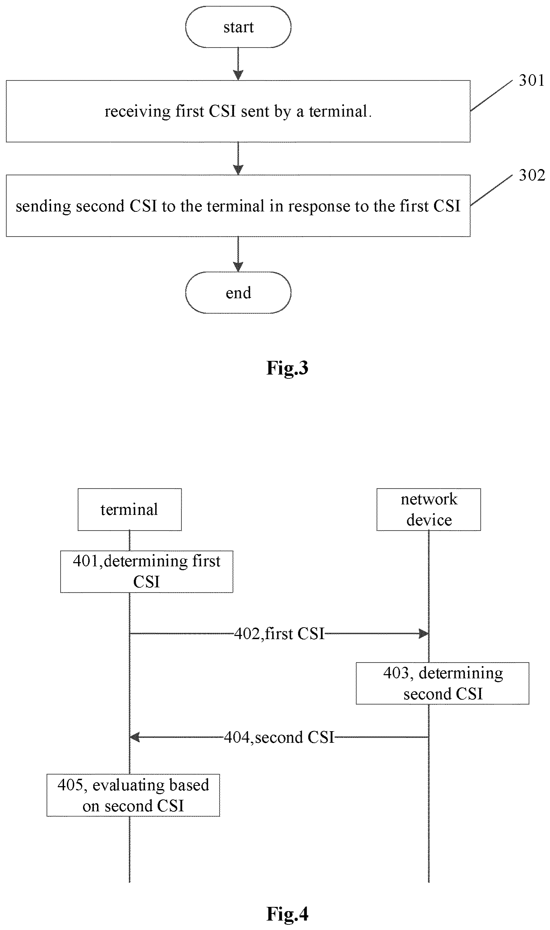

Referring to FIG. 3, FIG. 3 is a flowchart of an information processing method according to an embodiment of the present disclosure. This embodiment may include:
Step 301: receiving first CSI transmitted by a terminal.
Step 302: transmitting second CSI to the terminal in response to the first CSI.

The second CSI may be determined based on the first CSI, and the second CSI is used to evaluate performance of a first model and/or a first method, where the first model is a model used to determine CSI, and the first method is a method for determining and/or feeding back CSI.

The first CSI may be determined based on a first model, or may be determined based on a second model. For example, the first model may be a terminal-side model, or a network device-side (e.g., base station-side) model, or may include both terminal-side and base station-side models. Correspondingly, the second model may be a base station-side model, or a terminal-side model, or may include both terminal-side and base station-side models.

In embodiments of the present disclosure, the second CSI being determined based on the first CSI may include: in the case where the first CSI is obtained based on a first model, the second CSI is obtained based on a second model; or in the case where the first CSI is obtained based on a second model, the second CSI is obtained based on a first model. Specifically, the second CSI may be determined through one or more of the following approaches:
using the first CSI as input to the first model and utilizing the first model to obtain the second CSI, or using the first CSI as input to the second model and utilizing the second model to obtain the second CSI;
using the resulting data of de-quantizing or pre-processing the first CSI as an input to the first model and utilizing the first model to obtain the second CSI, or using the resulting data of de-quantizing or pre-processing the first CSI as an input to the second model and utilizing the second model to obtain the second CSI;
using output of the first model or the second model as the second CSI;
processing output of the first model or the second model to obtain the second CSI.

The explanation of the association relationship between the first model and the second model may refer to the description in the foregoing method embodiments.

Optionally, embodiments of the present disclosure may be applied to network devices, such as base stations, etc. The method of embodiments of the present disclosure may further include:
obtaining the association relationship between the second CSI and the first CSI based on the association relationship between the second CSI and a target object; or obtaining the association relationship between the second CSI and the target object based on the association relationship between the second CSI and the first CSI. The target object includes at least one of the following:
the third CSI corresponding to the first CSI; the first model; the second model corresponding to the first model; the first method.

Correspondingly, in step 302, the network device may send the second CSI to the terminal based on the association relationship between the second CSI and the first CSI; or send the second CSI to the terminal based on the association relationship between the second CSI and the target object.

Specifically, the network device may send the second CSI through a PDSCH, where one second CSI may be sent at a time, or multiple second CSIs may be sent at a time. The second CSI may be, for example, transmitting precoding matrix information and/or layer number information, such as generation parameters of DFT (Discrete Fourier Transform) vectors, index of precoding matrix, etc.

Optionally, the method may further include any one of the following:
N1. Transmitting first indication information to the terminal, where the first indication information is used to indicate the association relationship between the second CSI and the first CSI and/or the association relationship between the second CSI and the target object. The meaning and explanation of the first indication information may refer to the description in the foregoing method embodiments.

The association relationship between the second CSI and the first CSI includes one or more of the following:
the second CSI corresponds to the first CSI corresponding to the first information;
the second CSI corresponds to the first CSI that meets a first condition and corresponds to the first information;
the second CSI corresponds to the first CSI corresponding to the third indication information;
the second CSI corresponds to the first CSI that meets a second condition and corresponds to the third indication information;
the second CSI corresponds to the first CSI corresponding to the fourth indication information;
the model identifier corresponding to the first CSI corresponds to the model identifier corresponding to the second CSI;
the time offset between the transmission occasion of the first CSI and the transmission occasion of the second CSI is related to the time offset indicated by the sixth indication information;
the first CSI corresponds to the model corresponding to the second CSI;
the second CSI corresponds to the first CSI corresponding to the order of the second CSI;
the second CSI corresponds to the CSI report of the first CSI corresponding to the order of the second CSI;
the first CSI corresponds to the second CSI corresponding to the second information, in which case the transmitting the second CSI to the terminal includes one or more of the following:
   determining the channel corresponding to the second CSI based on the information of the channel where the second CSI is transmitted, and transmitting the second CSI at the resource position corresponding to the channel;
   determining the transmission occasion of the second CSI based on the transmission occasion corresponding to the second CSI, and transmitting the second CSI at the time corresponding to the transmission occasion;
   determining the time domain and/or frequency domain position where the second CSI is transmitted based on the model information corresponding to the second CSI, and transmitting the second CSI based on the time domain and/or frequency domain position where the second CSI is transmitted;
   determining the association relationship between the first CSI and the second CSI based on the model information corresponding to the second CSI, and transmitting the second CSI based on the association relationship between the first CSI and the second CSI.

For the explanation of each item in the association relationship between the second CSI and the first CSI, reference may also be made to the description in the foregoing method embodiments.

Optionally, one or more of the indication information in the first indication information for indicating the first information corresponding to the second CSI, the third indication information, the fourth indication information, the fifth indication information, the sixth indication information, the seventh indication information, the eighth indication information, and the ninth indication information may be transmitted simultaneously or non-simultaneously with the configuration information of the first CSI (e.g., reporting configuration information of the first CSI, resource configuration information of the first CSI, etc.). If transmitted non-simultaneously, the said indication information has an agreed (e.g., protocol-agreed) association relationship with the configuration information of the first CSI.

The network device may further determine one or more of the following:
determining one or more of the second CSI corresponding to the first CSI, transmission parameters of the second CSI corresponding to the first CSI, and the target object corresponding to the first CSI;
determining the target object corresponding to the second CSI;
determining the third CSI corresponding to the second CSI, where the third CSI is the channel information corresponding to the first CSI;
determining the transmission parameters of the second CSI corresponding to the third CSI, where the third CSI is the channel information corresponding to the first CSI;

The transmission parameters include transmission parameters for transmitting the second CSI. The transmission parameters may include, for example, transmission occasions, time domain or frequency domain resources, etc.

In specific applications, the network device may first determine one or more of the information in the first indication information, the first indication information to the ninth indication information, and then determine one or more of the transmission parameters, the target object, and the third CSI; or the network device may first determine one or more of the transmission parameters, the target object, and the third CSI, and then determine one or more of the information in the first indication information, the first indication information to the ninth indication information.

N2. Pre-agreeing with the terminal on the association relationship between the second CSI and the first CSI and/or the association relationship between the second CSI and the target object.

The pre-agreed association relationship with the terminal may refer to the explanation of the association relationship agreed between the terminal and the network device in the foregoing description.

N3. Receiving second indication information transmitted by the terminal, where the second indication information is used to indicate the association relationship between the second CSI and the first CSI and/or the association relationship between the second CSI and the target object.

The explanation of the second indication information may refer to the description in the foregoing method embodiments. In this case, the method further includes:
determining one or more of the following based on one or more of the tenth indication information, the eleventh indication information, the twelfth indication information, and the thirteenth indication information:

The second CSI; the association relationship between the first CSI and the second CSI; time domain and/or frequency domain resources for transmitting the second CSI; channel parameters for transmitting the second CSI.

Specifically, in this step, the second CSI may be transmitted through one or more of the following approaches:
determining the channel where the second CSI is transmitted based on the channel information where the second CSI is transmitted, and transmitting the second CSI at the resource position corresponding to the channel;
determining the transmission occasion of the second CSI based on the transmission occasion corresponding to the second CSI, and transmitting the second CSI at the time corresponding to the transmission occasion;
determining the time domain and/or frequency domain position where the second CSI is transmitted based on the model information corresponding to the second CSI, and transmitting the second CSI according to the time domain and/or frequency domain position where the second CSI is transmitted;
determining the association relationship between the first CSI and the second CSI based on the model information corresponding to the second CSI, and transmitting the second CSI according to the association relationship between the first CSI and the second CSI;
determining the second CSI based on the first model or the second model, and transmitting the second CSI, where the first model and the second model have an association relationship.

Optionally, the indication information in the above N3 may be received simultaneously with the first CSI, or may not be received simultaneously with the first CSI, but the first CSI and the said information have an agreed (e.g., protocol-agreed) association relationship (e.g., an agreed time domain relationship).

In embodiments of the present disclosure, performance of the first model and/or the first method may be evaluated based on the first CSI and the second CSI, thereby avoiding complex calculations and improving performance monitoring efficiency.

Referring to FIG. 4, FIG. 4 is a flowchart of an information processing method according to an embodiment of the present disclosure. The process may include the following steps:
Step 401: a terminal determining first CSI.

For example, the terminal may determine the first CSI based on third CSI and a fourth model. The third CSI may be CSI obtained by the terminal through measurement of downlink signals, or may be input information of the fourth model; information obtained by processing the third CSI may also be input information of the fourth model. The fourth model is a terminal-side model.

Step 402: the terminal transmitting the first CSI to a network device.

Step 403: the network device generating second CSI based on the first CSI and a fifth model. The fifth model is a network device-side model.

Step 404: the network device transmitting the second CSI to the terminal.

Step 405: the terminal evaluating performance of the fourth model and/or the fifth model based on the second CSI, or evaluates performance of the method for determining and/or feeding back CSI based on the fourth model and/or the fifth model.

Both the fourth model and the fifth model may serve as the aforementioned first model.

In this process, the terminal may determine the second CSI corresponding to the first CSI based on first indication information; or determine the first CSI corresponding to the second CSI based on first indication information; or determine the third CSI corresponding to the second CSI based on first indication information; or determine the second CSI corresponding to the third CSI based on first indication information.

Optionally, the terminal may also send second indication information to the network device. Where at least one of the following may be determined based on the second indication information:
the association relationship between the first CSI and the second CSI;
time domain and/or frequency domain resources for transmitting the second CSI;
channel parameters for transmitting the second CSI.

For more explanation of the second indication information, reference may be made to the description in the foregoing method embodiments.

Optionally, the network device sends first indication information to the terminal, where the first indication information is used to indicate the association relationship between the first CSI and the second CSI. Since the first CSI also has an association relationship with the third CSI, the first indication information also indicates the association relationship between the third CSI and the second CSI. Based on the first indication information, the terminal may determine the association relationship between the first CSI and the second CSI. Based on the first indication information, the terminal may also determine the association relationship between the third CSI and the second CSI. Thereby, the terminal may perform subsequent evaluations.

Optionally, the network device may agree with the terminal on the association relationship between the first CSI and the second CSI. This approach may refer to the description in the foregoing method embodiments.

In embodiments of the present disclosure, the terminal may obtain CSI without model transmission, thereby enabling calculation of intermediate KPIs and evaluation of performance of models and/or algorithms for determining and/or feeding back CSI, improving performance monitoring efficiency.

The technical solutions provided by embodiments of the present disclosure may be applicable to various systems, especially 5G systems. For example, applicable systems may include GSM (Global System for Mobile Communication) systems, CDMA (Code Division Multiple Access) systems, WCDMA (Wideband Code Division Multiple Access) systems, GPRS (General Packet Radio Service) systems, LTE (Long Term Evolution) systems, LTE FDD (Frequency Division Duplex) systems, LTE TDD (Time Division Duplex) systems, LTE-A (Long Term Evolution Advanced) systems, UMTS (Universal Mobile Telecommunication System), WiMAX (Worldwide Interoperability for Microwave Access) systems, 5G NR (New Radio) systems, etc. These various systems all include terminal devices and network devices. The systems may also include core network parts, such as EPS (Evolved Packet System), 5GS (5G System), etc.

The terminal devices involved in embodiments of the present disclosure may refer to devices that provide users with voice and/or data connectivity, handheld devices with wireless connectivity, or other processing devices connected to wireless modems. In different systems, the names of terminal devices may vary. For example, in 5G systems, terminal devices may be called UE (User Equipment). Wireless terminal devices may communicate with one or more CNs (Core Networks) via a RAN (Radio Access Network). Wireless terminal devices may be mobile terminal devices, such as mobile phones (or "cellular" phones) and computers with mobile terminal devices, which may be portable, pocket-sized, handheld, computer-built-in, or vehicle-mounted mobile devices that exchange voice and/or data with wireless access networks. For example, PCS (Personal Communication Service) phones, cordless phones, SIP (Session Initiated Protocol) phones, WLL (Wireless Local Loop) stations, PDAs (Personal Digital Assistants), etc. Wireless terminal devices may also be called systems, subscriber units, subscriber stations, mobile stations, mobiles, remote stations, access points, remote terminals, access terminals, user terminals, user agents, user devices, etc. The present disclosure does not limit this.

The network devices involved in embodiments of the present disclosure may be base stations, which may include multiple cells that provide services to terminals. Depending on specific application scenarios, base stations may also be called access points, or may be devices in access networks that communicate with wireless terminal devices via one or more sectors over air interfaces, or other names. Network devices may be used to mutually convert received air frames and IP (Internet Protocol) packets, serving as routers between wireless terminal devices and the rest of the access network, where the rest of the access network may include IP communication networks. Network devices may also coordinate attribute management of air interfaces. For example, the network devices involved in embodiments of the present disclosure may be network devices (e.g., BTS (Base Transceiver Station)) in GSM (Global System for Mobile Communications) or CDMA (Code Division Multiple Access), or network devices (e.g., NodeB) in WCDMA (Wide-band Code Division Multiple Access), or evolved network devices (e.g., eNB or e-NodeB (Evolutional NodeB)) in LTE (Long Term Evolution) systems, gNB (5G base stations) in 5G network architectures (Next Generation System), or HeNB (Home Evolved Node B), relay nodes, femtocells, picocells, etc. The present disclosure does not limit this. In some network structures, network devices may include CU (Centralized Unit) nodes and DU (Distributed Unit) nodes, which may also be geographically separated.

Network devices and terminal devices may each use one or more antennas for MIMO (Multi Input Multi Output) transmission, which may be SU-MIMO (Single User MIMO) or MU-MIMO (Multiple User MIMO). Depending on the form and number of antenna combinations, MIMO transmission may be 2D-MIMO (2 Dimensional MIMO), 3D-MIMO (3 Dimensional MIMO), FD-MIMO (Full Dimension MIMO), or massive-MIMO, or may be diversity transmission, precoding transmission, or beamforming transmission, etc.

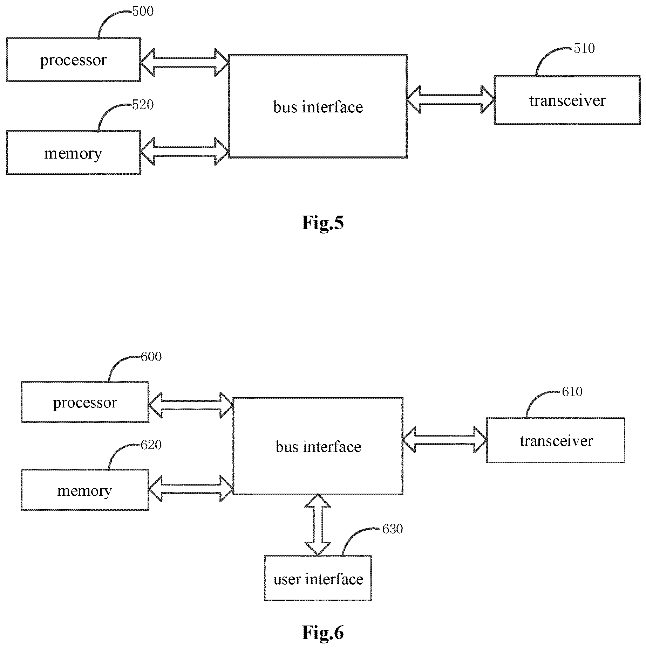

As shown in FIG. 5, the information processing device of the embodiments of the present disclosure, applied to a network device, includes: a processor 500, configured to read a program in a memory 520 and execute the following processes:
receiving first CSI transmitted by a terminal;
transmitting second CSI to the terminal in response to the first CSI;
where the second CSI is used to evaluate the performance of a first model and/or a first method, the first model is a model for determining CSI, and the first method is a method for determining and/or feeding back CSI.

A transceiver 510 is used for receiving and transmit data under the control of the processor 500.

In FIG. 5, the bus architecture may include any number of interconnected buses and bridges, specifically linking various circuits represented by one or more processors, such as the processor 500, and a memory represented by the memory 520. The bus architecture may also link various other circuits, such as peripheral devices, voltage regulators, and power management circuits, which are well-known in the art and will not be further described herein. A bus interface provides an interface. The transceiver 510 may include multiple components, such as a transmitter and a receiver, to provide communication units for transmitting data over a transmission medium with various other devices. The processor 500 is responsible for managing the bus architecture and general processing, and the memory 520 may store data used by the processor 500 when executing operations.

The processor 500 may be a CPU (Central Processing Unit), an ASIC (Application Specific Integrated Circuit), an FPGA (Field-Programmable Gate Array), or a CPLD (Complex Programmable Logic Device). The processor may also adopt a multi-core architecture.

The processor 500 is responsible for managing the bus architecture and general processing, and the memory 520 may store data used by the processor 500 when executing operations.

Optionally, the processor 500 is further configured to read the program and execute the following steps:
obtaining an association relationship between the second CSI and the first CSI based on an association relationship between the second CSI and a target object; or,
obtaining an association relationship between the second CSI and the target object based on the association relationship between the second CSI and the first CSI.

Optionally, the processor 500 is further configured to read the program and execute the following steps:
transmitting the second CSI to the terminal based on the association relationship between the second CSI and the first CSI; or,
transmitting the second CSI to the terminal based on the association relationship between the second CSI and the target object.

Optionally, the processor 500 is further configured to read the program and execute the following steps:
transmitting first indication information to the terminal, where the first indication information is used to indicate the association relationship between the second CSI and the first CSI and/or the association relationship between the second CSI and the target object;
pre-agreeing with the terminal on the association relationship between the second CSI and the first CSI and/or the association relationship between the second CSI and the target object;
receiving second indication information transmitted by the terminal, and obtaining an association relationship between the second CSI and the target object based on the second indication information, where the second indication information is used to indicate the association relationship between the second CSI and the first CSI and/or the association relationship between the second CSI and the target object.

The first indication information, second indication information, and the content pre-agreed with the terminal may refer to the descriptions in the foregoing method embodiments.

Optionally, one or more indication information in the first indication information, such as information indicating first information corresponding to the second CSI, third indication information, fourth indication information, fifth indication information, sixth indication information, seventh indication information, eighth indication information, or ninth indication information, may be transmitted simultaneously or non-simultaneously with the configuration information of the first CSI (e.g., reporting configuration information or resource configuration information of the first CSI). If transmitted non-simultaneously, the above indication information and the configuration information of the first CSI have a predefined (e.g., protocol-defined) association relationship.

Optionally, the association relationship between the second CSI and the first CSI includes one or more of the following:
the second CSI corresponds to the first CSI corresponding to the first information;
the second CSI corresponds to the first CSI satisfying a first condition and corresponding to the first information;
the second CSI corresponds to the first CSI corresponding to the third indication information;
the second CSI corresponds to the first CSI satisfying a second condition and corresponding to the third indication information;
the second CSI corresponds to the first CSI corresponding to the fourth indication information;
a model identifier corresponding to the first CSI corresponds to a model identifier corresponding to the second CSI;
a time offset between a transmission occasion of the first CSI and a transmission occasion of the second CSI is related to the time offset indicated by the sixth indication information;
the first CSI corresponds to the model corresponding to the second CSI;
the second CSI corresponds to the first CSI corresponding to the order of the second CSI;
the second CSI corresponds to a CSI report of the first CSI corresponding to the order of the second CSI;
the first CSI corresponds to the second CSI corresponding to the second information.

Optionally, in a case where the first CSI corresponds to the second CSI corresponding to the second information, the processor 500 is further configured to read the program and execute the following steps:
determining a channel corresponding to the second CSI based on information of a channel where the second CSI is transmitted, and transmitting the second CSI at a resource position corresponding to the channel;
determining a transmission occasion of the second CSI based on the transmission occasion corresponding to the second CSI, and transmitting the second CSI at a time corresponding to the transmission occasion;
determining a time domain and/or frequency domain position where the second CSI is transmitted based on model information corresponding to the second CSI, and transmitting the second CSI based on the time domain and/or frequency domain position where the second CSI is transmitted;
determining an association relationship between the first CSI and the second CSI based on model information corresponding to the second CSI, and transmitting the second CSI based on the association relationship between the first CSI and the second CSI.

Optionally, the second indication information includes one or more of the following:
tenth indication information, where the tenth indication information is used to indicate an identifier of the first CSI;
eleventh indication information, where the eleventh indication information is used to indicate resource information of the second CSI corresponding to the first CSI;
twelfth indication information, where the twelfth indication information is used to indicate channel-related information corresponding to the second CSI corresponding to the first CSI;
thirteenth indication information, where the thirteenth indication information is used to indicate model information corresponding to the second CSI corresponding to the first CSI.

Optionally, the processor 500 is further configured to read the program and execute the following steps:
determining one or more of the following based on one or more of the tenth indication information, the eleventh indication information, the twelfth indication information, and the thirteenth indication information:
the second CSI;
the association relationship between the first CSI and the second CSI;
time domain and/or frequency domain resources for transmitting the second CSI;
channel parameters for transmitting the second CSI.

Optionally, the second indication information may be received simultaneously with the first CSI, or not simultaneously with the first CSI, but the first CSI and the aforementioned information have a predetermined (e.g., protocol-defined) association relationship (e.g., a predetermined time-domain relationship).

Optionally, the processor 500 is further configured to read the program and execute the following steps:
determining a channel where the second CSI is transmitted based on channel information where the second CSI is transmitted, and transmitting the second CSI at a resource position corresponding to the channel;
determining a transmission occasion of the second CSI based on a transmission occasion corresponding to the second CSI, and transmitting the second CSI at a time corresponding to the transmission occasion;
determining a time domain and/or frequency domain position where the second CSI is transmitted based on model information corresponding to the second CSI, and transmitting the second CSI according to the time domain and/or frequency domain position where the second CSI is transmitted;
determining an association relationship between the first CSI and the second CSI based on model information corresponding to the second CSI, and transmitting the second CSI according to the association relationship between the first CSI and the second CSI; or
determining the second CSI based on the first model or a second model, and transmitting the second CSI, where the first model and the second model have an association relationship.

Optionally, the second CSI is determined in one or more of the following ways:
using the first CSI as input to the first model and utilizing the first model to obtain the second CSI, or, using the first CSI as input to a second model and utilizing the second model to obtain the second CSI;
using the resulting data of de-quantizing or pre-processing the first CSI as an input to the first model and utilizing the first model to obtain the second CSI, or, using the resulting data of de-quantizing or pre-processing the first CSI as an input to the second model and utilizing the second model to obtain the second CSI;
using an output of the first model or the second model as the second CSI; or
the second CSI is obtained by post-processing the output of the first model or the second model.

Optionally, the association relationship between the first model and the second model may refer to the description in the above embodiments.

Optionally, the processor 500 is further configured to read the program and execute the following steps:
transmitting one or more pieces of second CSI to the terminal through a Physical Downlink Shared Channel (PDSCH).

Optionally, the target object includes at least one of the following:
third CSI corresponding to the first CSI;
the first model;
a second model corresponding to the first model; or
the first method.

It should be noted that the device provided in the embodiments of the present disclosure can implement all the method steps of the foregoing method embodiments and achieve the same technical effects. Details and beneficial effects of the same parts as those in the method embodiments are not repeated herein.

As shown in FIG. 6, the information processing device of the embodiments of the present disclosure, applied to a terminal, includes: a processor 600, configured to read a program in a memory 620 and execute the following processes:
transmitting first CSI to a network device;
receiving second CSI transmitted by the network device in response to the first CSI;
evaluating the performance of a first model and/or a first method based on the second CSI, where the first model is a model for determining CSI, and the first method is a method for determining and/or feeding back CSI.
a transceiver 610 is used for receiving and transmit data under the control of the processor 600.

In FIG. 6, the bus architecture may include any number of interconnected buses and bridges, specifically linking various circuits represented by one or more processors, such as the processor 600, and a memory represented by the memory 620. The bus architecture may also link various other circuits, such as peripheral devices, voltage regulators, and power management circuits, which are well-known in the art and will not be further described herein. A bus interface provides an interface. The transceiver 610 may include multiple components, such as a transmitter and a receiver, to provide communication units for transmitting data over a transmission medium with various other devices. For different user equipment, a user interface 630 may also be an interface for connecting external or internal devices, including but not limited to a keypad, a display, a speaker, a microphone, a joystick, etc.

The processor 600 is responsible for managing the bus architecture and general processing, and the memory 620 may store data used by the processor 600 when executing operations.

The processor 600 may be a CPU, an ASIC, an FPGA, or a CPLD. The processor may also adopt a multi-core architecture.

The processor 600 calls a computer program stored in the memory to execute the methods provided in any of the foregoing embodiments of the present disclosure. The processor and the memory may also be physically separated.

Optionally, the processor 600 is further configured to read the program and execute the following steps:
evaluating the performance of the first model and/or the first method based on the second CSI and the association relationship between the second CSI and the first CSI; or,
evaluating the performance of the first model and/or the first method based on the association relationship between the second CSI and a target object and the second CSI;
where the target object has an association relationship with the first CSI.

Optionally, the processor 600 is further configured to read the program and execute the following steps:
obtaining an association relationship between the second CSI and the first CSI based on an association relationship between the second CSI and a target object; or,
obtaining an association relationship between the second CSI and the target object based on the association relationship between the second CSI and the first CSI.

Optionally, the processor 600 is further configured to read the program and execute the following steps:
receiving the second CSI based on the association relationship between the second CSI and the first CSI; or,
receiving the second CSI based on the association relationship between the second CSI and the target object.

Optionally, the processor 600 is further configured to read the program and execute one or more of the following steps:
receiving first indication information transmitted by the network device, and obtaining an association relationship between the second CSI and a target object based on the first indication information, where the first indication information is used to indicate the association relationship between the second CSI and the first CSI and/or the association relationship between the second CSI and the target object;
pre-agreeing with the network device on the association relationship between the second CSI and the first CSI and/or the association relationship between the second CSI and the target object;
transmitting second indication information to the network device, where the second indication information is used to indicate the association relationship between the second CSI and the first CSI and/or the association relationship between the second CSI and the target object.

The first indication information, second indication information, and the information pre-agreed with the network device may refer to the descriptions in the foregoing method embodiments.

Optionally, one or more indication information in the first indication information, such as information indicating first information corresponding to the second CSI, third indication information, fourth indication information, fifth indication information, sixth indication information, seventh indication information, eighth indication information, or ninth indication information, may be received simultaneously or non-simultaneously with the configuration information of the first CSI (e.g., reporting configuration information or resource configuration information of the first CSI). If received non-simultaneously, the above indication information and the configuration information of the first CSI have a predefined (e.g., protocol-defined) association relationship.

Optionally, the second indication information is transmitted to the network device simultaneously with the first CSI or non-simultaneously, but the first CSI and the above information have a predefined (e.g., protocol-defined) association relationship (e.g., a predefined time relationship).

Optionally, the association relationship between the second CSI and the first CSI includes one or more of the following:
the second CSI corresponds to the first CSI corresponding to the first information;
the second CSI corresponds to the first CSI satisfying a first condition and corresponding to the first information;
the second CSI corresponds to the first CSI corresponding to the third indication information;
the second CSI corresponds to the first CSI satisfying a second condition and corresponding to the third indication information;
the second CSI corresponds to the first CSI corresponding to the fourth indication information;
a model identifier corresponding to the first CSI corresponds to a model identifier corresponding to the second CSI;
a time offset between a transmission occasion of the first CSI and a transmission occasion of the second CSI is related to the time offset indicated by the sixth indication information;
the first CSI corresponds to the model corresponding to the second CSI;
the second CSI corresponds to the first CSI corresponding to the order of the second CSI;
the second CSI corresponds to a CSI report of the first CSI corresponding to the order of the second CSI;
the first CSI corresponds to the second CSI corresponding to the second information.

Optionally, in a case where the first CSI corresponds to the second CSI corresponding to the second information, the processor 600 is further configured to read the program and execute the following steps:
determining a channel corresponding to the second CSI based on information of a channel where the second CSI is transmitted, and receiving the second CSI at a resource position corresponding to the channel;
determining a transmission occasion of the second CSI based on a transmission occasion corresponding to the second CSI, and receiving the second CSI at a time corresponding to the transmission occasion;
determining a time domain and/or frequency domain position where the second CSI is transmitted based on model information corresponding to the second CSI, and receiving the second CSI based on the time domain and/or frequency domain position where the second CSI is transmitted;
determining an association relationship between the first CSI and the second CSI based on model information corresponding to the second CSI, and receiving the second CSI based on the association relationship between the first CSI and the second CSI.

Optionally, the processor 600 is further configured to read the program and execute one or more of the following steps:
determining one or more of the second CSI corresponding to the first CSI or a target object corresponding to the first CSI, based on one or more of: the information indicating the first information corresponding to the second CSI, the third indication information, the fourth indication information, the fifth indication information, the sixth indication information, the seventh indication information, the eighth indication information, or the ninth indication information;
determining one or more of the first CSI corresponding to the second CSI or a target object corresponding to the second CSI, based on one or more of: the information indicating the first information corresponding to the second CSI, the third indication information, the fourth indication information, the fifth indication information, the sixth indication information, the seventh indication information, the eighth indication information, or the ninth indication information;
determining third CSI corresponding to the second CSI based on one or more of: the information indicating the first information corresponding to the second CSI, the third indication information, the fourth indication information, the fifth indication information, the sixth indication information, the seventh indication information, the eighth indication information, or the ninth indication information, where the third CSI is channel information corresponding to the first CSI;
determining the second CSI corresponding to the third CSI based on one or more of: the information indicating the first information corresponding to the second CSI, the third indication information, the fourth indication information, the fifth indication information, the sixth indication information, the seventh indication information, the eighth indication information, or the ninth indication information, where the third CSI is channel information corresponding to the first CSI.

Optionally, the processor 600 is further configured to read the program and execute the following steps:
calculating a performance metric based on the second CSI;
evaluating the performance of the first model and/or the first method based on the performance metric.

Optionally, the processor 600 is further configured to read the program and execute the following steps:
calculating the performance metric based on third CSI and the second CSI; or
obtaining an equivalent channel based on a raw channel corresponding to the first CSI and the second CSI, and calculating the performance metric based on the equivalent channel; or
calculating a first performance metric corresponding to the third CSI and a second performance metric corresponding to the second CSI respectively, where the performance metric includes the first performance metric and the second performance metric;
where the third CSI is channel information determined based on a downlink reference signal corresponding to the first CSI, or the third CSI is input information of a second model, or the third CSI is CSI for obtaining input information of the second model, and the second model is used for determining the first CSI.

Optionally, the processor 600 is further configured to read the program and execute the following steps:
determining the first CSI based on the first model or a second model;
transmitting the first CSI to the network device;
where the first model and the second model have an association relationship.

Optionally, the processor 600 is further configured to read the program and execute one or more of the following steps:
the second CSI is obtained based on the second model, and the first CSI is used as an input to the second model;
the second CSI is obtained based on the second model , wherein the resulting data of de-quantizing or pre-processing the first CSI is used as an input to the second model;
the second CSI is an output of the second model;
the second CSI is obtained by post-processing the output of the second model;
the second CSI is obtained based on the first model, and the first CSI is used as an input to the first model;
using the resulting data of de-quantizing or pre-processing the first CSI as an input to the first modelthe second CSI is obtained through the second model, wherein the resulting data of de-quantizing or pre-processing the first CSI is used as an input to the first model;
the second CSI is an output of the first model;
the second CSI is obtained by post-processing the output of the first model;
where the second model and the first model have an association relationship.

The explanation of the association relationship between the first model and the second model may refer to the descriptions in the foregoing method embodiments. The explanations of the second CSI and the target object may also refer to the descriptions in the foregoing method embodiments.

It should be noted that the device provided in the embodiments of the present disclosure can implement all the method steps of the foregoing method embodiments and achieve the same technical effects. Details and beneficial effects of the same parts as those in the method embodiments are not repeated herein.

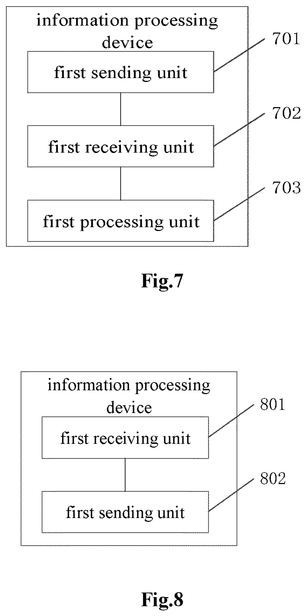

As shown in FIG. 7, the information processing device of the embodiments of the present disclosure, applied to a terminal, includes:
a first transmitting unit 701, used for sending first CSI to a network device;
a first receiving unit 702, used for receiving second CSI transmitted by the network device in response to the first CSI;
a first processing unit 703, used for evaluating the performance of a first model and/or a first method based on the second CSI, where the first model is a model for determining CSI, and the first method is a method for determining and/or feeding back CSI.

Optionally, the first processing unit may include:
a first processing subunit, used for evaluating the performance of the first model and/or the first method based on the second CSI and the association relationship between the second CSI and the first CSI; or,
a second processing subunit, used for evaluating the performance of the first model and/or the first method based on the second CSI and the association relationship between the second CSI and a target object ;
where the target object has an association relationship with the first CSI.

Optionally, the device may further include:
a first obtaining unit, used for obtaining an association relationship between the second CSI and the first CSI based on an association relationship between the second CSI and a target object; or,
a second obtaining unit, used for obtaining an association relationship between the second CSI and the target object based on the association relationship between the second CSI and the first CSI.

Optionally, the first receiving unit is further used to:
receive the second CSI based on the association relationship between the second CSI and the first CSI; or,
receive the second CSI based on the association relationship between the second CSI and the target object.

Optionally, the device further includes one or more of the following units:
a second receiving unit, used for receiving first indication information transmitted by the network device, and obtain an association relationship between the second CSI and a target object based on the first indication information, where the first indication information is used to indicate the association relationship between the second CSI and the first CSI and/or the association relationship between the second CSI and the target object;
a second processing unit, used for pre-agreeing with the network device on the association relationship between the second CSI and the first CSI and/or the association relationship between the second CSI and the target object;
a second transmitting unit, used for sending second indication information to the network device, where the second indication information is used to indicate the association relationship between the second CSI and the first CSI and/or the association relationship between the second CSI and the target object.

The meanings of the first indication information, second indication information, information pre-agreed with the network device, and target information may refer to the descriptions in the foregoing method embodiments.

Optionally, the association relationship between the second CSI and the first CSI includes one or more of the following:
the second CSI corresponds to the first CSI corresponding to the first information;
the second CSI corresponds to the first CSI satisfying a first condition and corresponding to the first information;
the second CSI corresponds to the first CSI corresponding to the third indication information;
the second CSI corresponds to the first CSI satisfying a second condition and corresponding to the third indication information;
the second CSI corresponds to the first CSI corresponding to the fourth indication information;
a model identifier corresponding to the first CSI corresponds to a model identifier corresponding to the second CSI;
a time offset between a transmission occasion of the first CSI and a transmission occasion of the second CSI is related to the time offset indicated by the sixth indication information;
the first CSI corresponds to the model corresponding to the second CSI;
the second CSI corresponds to the first CSI corresponding to the order of the second CSI;
the second CSI corresponds to a CSI report of the first CSI corresponding to the order of the second CSI;
the first CSI corresponds to the second CSI corresponding to the second information.

In a case where the first CSI corresponds to the second CSI corresponding to the second information, the first receiving unit is used for performing one or more of the following:
determining a channel corresponding to the second CSI based on information of a channel where the second CSI is transmitted, and receiving the second CSI at a resource position corresponding to the channel;
determining a transmission occasion of the second CSI based on a transmission occasion corresponding to the second CSI, and receiving the second CSI at a time corresponding to the transmission occasion;
determining a time domain and/or frequency domain position where the second CSI is transmitted based on model information corresponding to the second CSI, and receiving the second CSI based on the time domain and/or frequency domain position where the second CSI is transmitted;
determining an association relationship between the first CSI and the second CSI based on model information corresponding to the second CSI, and receiving the second CSI based on the association relationship between the first CSI and the second CSI.

Optionally, the device may further include a third processing unit, used for performing one or more of the following:
based on the information indicating the first information corresponding to the second CSI, the third indication information, the fourth indication information, the fifth indication information, the sixth indication information, the seventh indication information, the eighth indication information, or the ninth indication information, determine one or more of the second CSI corresponding to the first CSI or the target object corresponding to the first CSI;
based on the information indicating the first information corresponding to the second CSI, the third indication information, the fourth indication information, the fifth indication information, the sixth indication information, the seventh indication information, the eighth indication information, or the ninth indication information, determine one or more of the first CSI corresponding to the second CSI or the target object corresponding to the second CSI;
based on the information indicating the first information corresponding to the second CSI, the third indication information, the fourth indication information, the fifth indication information, the sixth indication information, the seventh indication information, the eighth indication information, or the ninth indication information, determine the third CSI corresponding to the second CSI, where the third CSI is channel information corresponding to the first CSI;
based on the information indicating the first information corresponding to the second CSI, the third indication information, the fourth indication information, the fifth indication information, the sixth indication information, the seventh indication information, the eighth indication information, or the ninth indication information, determine the second CSI corresponding to the third CSI, where the third CSI is channel information corresponding to the first CSI.

Optionally, the first processing unit may include:
a first calculation subunit, used for calculating a performance metric based on the second CSI;
a first evaluation subunit, used for evaluating the performance of the first model and/or the first method based on the performance metric.

Optionally, the first calculation subunit is used to:
calculate the performance metric based on the third CSI and the second CSI; or
obtain an equivalent channel based on a raw channel corresponding to the first CSI and the second CSI, and calculate the performance metric based on the equivalent channel; or
calculate a first performance metric corresponding to the third CSI and a second performance metric corresponding to the second CSI, respectively, where the performance metric includes the first performance metric and the second performance metric;
where the third CSI is channel information determined based on a downlink reference signal corresponding to the first CSI, or the third CSI is input information of a second model, or the third CSI is CSI for obtaining input information of the second model, and the second model is used for determining the first CSI.

For explanations regarding the performance metric, reference may be made to the descriptions in the foregoing method embodiments.

Optionally, the first transmitting unit includes:
a first determination subunit, used for determining the first CSI based on the first model or a second model;
a first transmitting subunit, used for sending the first CSI to the network device;
where the first model and the second model have an association relationship.

Optionally, the device may further include a fourth processing unit, used for performing one or more of the following:
the second CSI is obtained based on the second model, and the first CSI is used as an input to the second modelt;
the second CSI is obtained by using the resulting data of de-quantizing or pre-processing the first CSI as an input to the second model and utilizing the second model;
the second CSI is an output of the second model;
the second CSI is obtained by post-processing the output of the second model;
the second CSI is obtained based on the first model, and the first CSI is used as an input to the first model;
the second CSI is obtained by using the resulting data of de-quantizing or pre-processing the first CSI as an input to the first model and utilizing the second model;
the second CSI is an output of the first model;
the second CSI is obtained by post-processing the output of the first model;
where the second model and the first model have an association relationship. Explanations regarding the association relationship between the second model and the first model may refer to the descriptions in the foregoing method embodiments.

It should be noted that the device provided in the embodiments of the present disclosure can implement all the method steps described in the foregoing method embodiments and achieve the same technical effects. To avoid repetition, details and beneficial effects identical to those in the method embodiments are not repeated herein.

As shown in FIG. 8, the information processing device of the embodiments of the present disclosure, applied to a network device, includes:
a first receiving unit 801, used for receiving first CSI transmitted by a terminal;
a first transmitting unit 802, used for sending second CSI to the terminal in response to the first CSI;
where the second CSI is used to evaluate the performance of a first model and/or a first method, the first model is a model for determining CSI, and the first method is a method for determining and/or feeding back CSI.

Optionally, the device may further include:
a first obtaining unit, used for obtaining an association relationship between the second CSI and the first CSI based on an association relationship between the second CSI and a target object; or,
a second obtaining unit, used for obtaining an association relationship between the second CSI and the target object based on the association relationship between the second CSI and the first CSI.

Optionally, the first transmitting unit is further used to:
send the second CSI to the terminal based on the association relationship between the second CSI and the first CSI; or,
send the second CSI to the terminal based on the association relationship between the second CSI and the target object.

Optionally, the device may further include any one of the following:
a third transmitting unit, used for sending first indication information to the terminal, where the first indication information is used for indicating the association relationship between the second CSI and the first CSI and/or an association relationship between the second CSI and a target object;
a first processing unit, used for pre-agreeing with the terminal on the association relationship between the second CSI and the first CSI and/or the association relationship between the second CSI and the target object;
a second receiving unit, used for receiving second indication information transmitted by the terminal, and obtain an association relationship between the second CSI and the target object based on the second indication information, where the second indication information is used for indicating the association relationship between the second CSI and the first CSI and/or the association relationship between the second CSI and the target object.

The meanings of the first indication information, second indication information, information pre-agreed with the network device, and target object may refer to the descriptions in the foregoing method embodiments.

Optionally, the association relationship between the second CSI and the first CSI includes one or more of the following:
the second CSI corresponds to the first CSI corresponding to the first information;
the second CSI corresponds to the first CSI satisfying a first condition and corresponding to the first information;
the second CSI corresponds to the first CSI corresponding to the third indication information;
the second CSI corresponds to the first CSI satisfying a second condition and corresponding to the third indication information;
the second CSI corresponds to the first CSI corresponding to the fourth indication information;
a model identifier corresponding to the first CSI corresponds to a model identifier corresponding to the second CSI;
a time offset between a transmission occasion of the first CSI and a transmission occasion of the second CSI is related to the time offset indicated by the sixth indication information;
the first CSI corresponds to the model corresponding to the second CSI;
the second CSI corresponds to the first CSI corresponding to the order of the second CSI;
the second CSI corresponds to a CSI report of the first CSI corresponding to the order of the second CSI;
the first CSI corresponds to the second CSI corresponding to the second information.

Optionally, in a case where the first CSI corresponds to the second CSI corresponding to the second information, the first transmitting unit is further used for performing one or more of the following:
determine a channel corresponding to the second CSI based on information of a channel where the second CSI is transmitted, and send the second CSI at a resource position corresponding to the channel;
determine a transmission occasion of the second CSI based on a transmission occasion corresponding to the second CSI, and send the second CSI at a time corresponding to the transmission occasion;
determine a time domain and/or frequency domain position where the second CSI is transmitted based on model information corresponding to the second CSI, and send the second CSI based on the time domain and/or frequency domain position where the second CSI is transmitted;
determine an association relationship between the first CSI and the second CSI based on model information corresponding to the second CSI, and send the second CSI based on the association relationship between the first CSI and the second CSI.

Optionally, the first transmitting unit is further used for performing one or more of the following:
determine a channel where the second CSI is transmitted based on channel information where the second CSI is transmitted, and send the second CSI at a resource position corresponding to the channel;
determine a transmission occasion of the second CSI based on a transmission occasion corresponding to the second CSI, and send the second CSI at a time corresponding to the transmission occasion;
determine a time domain and/or frequency domain position where the second CSI is transmitted based on model information corresponding to the second CSI, and send the second CSI according to the time domain and/or frequency domain position where the second CSI is transmitted;
determine an association relationship between the first CSI and the second CSI based on model information corresponding to the second CSI, and send the second CSI according to the association relationship between the first CSI and the second CSI;
determine the second CSI based on the first model or a second model, and send the second CSI, where the first model and the second model have an association relationship.

Optionally, the second CSI is determined in one or more of the following ways:
using the first CSI as input to the first model and utilizing the first model to obtain the second CSI, or, using the first CSI as input to a second model and utilizing the second model to obtain the second CSI;
using the resulting data of de-quantizing or pre-processing the first CSI as an input to the first model and utilizing the first model to obtain the second CSI, or, using the resulting data of de-quantizing or pre-processing the first CSI as an input to the second model and utilizing the second model to obtain the second CSI;
using an output of the first model or the second model as the second CSI;
the second CSI is obtained by post-processing the output of the first model or the second model.

For explanations regarding the association relationship between the first model and the second model, reference may be made to the descriptions in the foregoing method embodiments.

Optionally, the first transmitting unit is further used for sending one or more pieces of second CSI to the terminal through a PDSCH.

It should be noted that the device provided in the embodiments of the present disclosure can implement all the method steps described in the foregoing method embodiments and achieve the same technical effects. To avoid repetition, details and beneficial effects identical to those in the method embodiments are not repeated herein.

It should be noted that the division of units in the embodiments of the present disclosure is illustrative and is merely a division of logical functions. In actual implementation, there may be other division methods. In addition, the functional units in the various embodiments of the present disclosure may be integrated into one processing unit, or each unit may exist physically alone, or two or more units may be integrated into one unit. The integrated units may be implemented in hardware or in the form of software functional units.

If the integrated units are implemented in the form of software functional units and sold or used as independent products, they may be stored in a processor-readable storage medium. Based on this understanding, the technical solutions of the present disclosure, in essence or the part contributing to the related art, may be embodied in the form of a software product. The computer software product is stored in a storage medium and includes instructions for causing a computer device (which may be a personal computer, server, network device, etc.) or processor to perform all or part of the steps of the methods described in the various embodiments of the present disclosure. The aforementioned storage medium includes: U disk, mobile hard disk, ROM (Read-Only Memory), RAM (Random Access Memory), magnetic disk, optical disk, or other media capable of storing program code.

The embodiments of the present disclosure further provide a communication device, including: a memory, a processor, and a program stored on the memory and executable on the processor, where the processor, when executing the program, implements the steps of the information processing method described above.

The embodiments of the present disclosure further provide a processor-readable storage medium, where the storage medium stores a program, and the program, when executed by the processor, implements the processes of the foregoing information processing method embodiments and achieves the same technical effects. To avoid repetition, details are not repeated herein. The readable storage medium may be any available medium or data storage device accessible to the processor, including but not limited to magnetic storage (e.g., floppy disk, hard disk, magnetic tape, MO (Magneto-Optical disk), etc.), optical storage (e.g., CD (Compact Disk), DVD (Digital Video Disc), BD (Blu-ray Disc), HVD (High-definition Versatile Disc), etc.), and semiconductor storage (e.g., ROM, EPROM (Electrical Programmable Read-Only Memory), EEPROM (Electrically Erasable Programmable Read-Only Memory), NAND FLASH, SSD (Solid State hard Disk), etc.).

It should be noted that, in this document, the terms "include," "comprise," or any other variations thereof are intended to cover non-exclusive inclusion, so that a process, method, article, or device that includes a series of elements includes not only those elements but also other elements not explicitly listed, or elements inherent to such process, method, article, or device. Without further limitation, an element defined by the phrase "including a..." does not preclude the existence of additional identical elements in the process, method, article, or device that includes the element.

Through the descriptions of the above embodiments, those skilled in the art can clearly understand that the methods in the above embodiments may be implemented by means of software plus a necessary general hardware platform, or of course, by hardware. However, in many cases, the former is a better implementation. Based on this understanding, the technical solutions of the present disclosure, in essence or the part contributing to the related art, may be embodied in the form of a software product. The computer software product is stored in a storage medium (such as ROM/RAM, magnetic disk, optical disk) and includes instructions for causing a terminal (which may be a mobile phone, computer, server, air conditioner, or network device, etc.) to execute the methods described in the various embodiments of the present disclosure.

It should be noted that the division of the above modules is merely a division of logical functions, and in actual implementation, they may be fully or partially integrated into one physical entity, or physically separated. These modules may all be implemented in the form of software called by processing elements; or all implemented in hardware; or some modules may be implemented in the form of software called by processing elements, and some modules may be implemented in hardware. For example, a determination module may be a separately established processing element or integrated into a chip of the above device. Alternatively, it may be stored in the memory of the above device in the form of program code and called and executed by a processing element of the above device to implement the function of the determination module. The implementation of other modules is similar. In addition, these modules may be fully or partially integrated or implemented independently. The processing element mentioned here may be an integrated circuit with signal processing capabilities. In the implementation process, each step of the above method or each module may be completed by an integrated logic circuit of hardware in the processing element or instructions in the form of software.

For example, each module, unit, subunit, or submodule may be one or more integrated circuits configured to implement the above method, such as one or more ASICs, one or more DSPs (digital signal processors), or one or more FPGAs, etc. For another example, when a module is implemented in the form of a processing element calling program code, the processing element may be a general-purpose processor, such as a CPU or other processor capable of calling program code. For yet another example, these modules may be integrated together and implemented in the form of a system-on-a-chip (SOC).

The terms "first," "second," etc., in the specification and claims of the present disclosure are used to distinguish similar objects and do not necessarily describe a specific order or sequence. It should be understood that the data so used may be interchanged under appropriate circumstances so that the embodiments of the present disclosure described herein can be implemented in sequences other than those illustrated or described herein. In addition, the terms "include," "comprise," and any variations thereof are intended to cover non-exclusive inclusion, so that a process, method, article, or device that includes a series of elements includes not only those elements but also other elements not explicitly listed, or elements inherent to such process, method, article, or device. Without further limitation, an element defined by the phrase "including a..." does not preclude the existence of additional identical elements in the process, method, article, or device that includes the element. Furthermore, the use of "and/or" in the specification and claims indicates at least one of the connected objects, such as A and/or B and/or C, which includes seven cases: A alone, B alone, C alone, both A and B, both B and C, both A and C, and all of A, B, and C. Similarly, the phrase "at least one of A and B" in the specification and claims should be understood as "A alone, B alone, or both A and B."

The embodiments of the present disclosure are described above with reference to the accompanying drawings, but the present disclosure is not limited to the above specific implementations. The above specific implementations are merely illustrative and not restrictive. Under the inspiration of the present disclosure, those of ordinary skill in the art may make many forms without departing from the scope of the claims and the spirit of the present disclosure, all of which fall within the protection of the present disclosure.

## Claims

1. An information processing method, applied to a terminal, comprising:
transmitting first Channel State Information (CSI) to a network device;
receiving second CSI transmitted by the network device in response to the first CSI; and
evaluating a performance of a first model and/or a first method based on the second CSI, wherein the first model is a model for determining CSI, and the first method is a method for determining and/or feeding back CSI.

2. The method according to claim 1, wherein the evaluating the performance of the first model and/or the first method based on the second CSI comprises:
evaluating the performance of the first model and/or the first method based on the second CSI and an association relationship between the second CSI and the first CSI; or,
evaluating the performance of the first model and/or the first method based on the second CSI and an association relationship between the second CSI and a target object;
wherein the target object has an association relationship with the first CSI.

3. The method according to claim 1, further comprising:
obtaining an association relationship between the second CSI and the first CSI based on an association relationship between the second CSI and a target object; or,
obtaining an association relationship between the second CSI and a target object based on the association relationship between the second CSI and the first CSI.

4. The method according to claim 1, wherein the receiving the second CSI transmitted by the network device in response to the first CSI comprises:
receiving the second CSI based on an association relationship between the second CSI and the first CSI; or,
receiving the second CSI based on an association relationship between the second CSI and a target object.

5. The method according to claim 1, further comprising any one of:
receiving first indication information transmitted by the network device, and obtaining an association relationship between the second CSI and a target object based on the first indication information, wherein the first indication information is used for indicating an association relationship between the second CSI and the first CSI and/or the association relationship between the second CSI and a target object;
pre-agreeing with a network device on an association relationship between the second CSI and the first CSI and/or an association relationship between the second CSI and a target object;
transmitting second indication information to the network device, wherein the second indication information is used for indicating an association relationship between the second CSI and the first CSI and/or an association relationship between the second CSI and a target object.

6. The method according to claim 5, wherein the first indication information comprises one or more of:
information indicating first information corresponding to the second CSI; wherein the first information comprises one or more of: an identifier of a reference signal and/or a transmission occasion of a reference signal, an identifier of a reference signal resource and/or a transmission occasion of a reference signal resource, an identifier of a reference signal resource set and/or a transmission occasion of a reference signal resource set, a reference signal resource configuration, a reference resource configuration;
third indication information, wherein the third indication information is used for indicating an association relationship between the second CSI and CSI report configuration information, and/or, used for indicating an association relationship between the second CSI and time domain resource information and/or frequency domain resource information of a CSI report;
fourth indication information, wherein the fourth indication information is used for indicating channel related information corresponding to the second CSI;
fifth indication information, wherein the fifth indication information is used for indicating an identifier of a model corresponding to the second CSI;
sixth indication information, wherein the sixth indication information is used for indicating a time offset between a transmission occasion of the first CSI and a transmission occasion of the second CSI;
seventh indication information, wherein the seventh indication information is used for indicating an association relationship between the second CSI and a model;
eighth indication information, wherein the eighth indication information is used for indicating an ordering manner of the second CSI in data or signaling carrying the second CSI;
ninth indication information, wherein the ninth indication information is used for indicating second information corresponding to the first CSI, wherein the second information comprises one or more of:
information of a channel where the second CSI is transmitted;
resource information corresponding to the second CSI;
a transmission occasion corresponding to the second CSI; or
model information corresponding to the second CSI.

7. The method according to claim 6, wherein the association relationship between the second CSI and the first CSI comprises one or more of:
the second CSI corresponds to the first CSI corresponding to the first information;
the second CSI corresponds to the first CSI satisfying a first condition and corresponding to the first information;
the second CSI corresponds to the first CSI corresponding to the third indication information; or
the second CSI corresponds to the first CSI satisfying a second condition and corresponding to the third indication information;
the second CSI corresponds to the first CSI corresponding to the fourth indication information;
a model identifier corresponding to the first CSI corresponds to a model identifier corresponding to the second CSI;
a time offset between a transmission occasion of the first CSI and a transmission occasion of the second CSI is related to the time offset indicated by the sixth indication information;
the first CSI corresponds to the model corresponding to the second CSI;
the second CSI corresponds to the first CSI corresponding to the order of the second CSI;
the second CSI corresponds to a CSI report of the first CSI corresponding to the order of the second CSI; or
the first CSI corresponds to the second CSI corresponding to the second information.

8. The method according to claim 7, wherein in a case where the first CSI corresponds to the second CSI corresponding to the second information, the receiving the second CSI transmitted by the network device in response to the first CSI comprises one or more of:
determining a channel corresponding to the second CSI based on information of a channel where the second CSI is transmitted, and receiving the second CSI at a resource position corresponding to the channel;
determining a transmission occasion of the second CSI based on the transmission occasion corresponding to the second CSI, and receiving the second CSI at a time corresponding to the transmission occasion;
determining a time domain and/or frequency domain position where the second CSI is transmitted based on the model information corresponding to the second CSI, and receiving the second CSI based on the time domain and/or frequency domain position where the second CSI is transmitted;
determining the association relationship between the first CSI and the second CSI based on the model information corresponding to the second CSI, and receiving the second CSI based on the association relationship between the first CSI and the second CSI.

9. The method according to claim 6, further comprising one or more of:
determining one or more of the second CSI corresponding to the first CSI or the target object corresponding to the first CSI, based on one or more of: the information indicating the first information corresponding to the second CSI, the third indication information, the fourth indication information, the fifth indication information, the sixth indication information, the seventh indication information, the eighth indication information, or the ninth indication information;
determining one or more of the first CSI corresponding to the second CSI or the target object corresponding to the second CSI, based on one or more of: the information indicating the first information corresponding to the second CSI, the third indication information, the fourth indication information, the fifth indication information, the sixth indication information, the seventh indication information, the eighth indication information, or the ninth indication information;
determining third CSI corresponding to the second CSI based on one or more of: the information indicating the first information corresponding to the second CSI, the third indication information, the fourth indication information, the fifth indication information, the sixth indication information, the seventh indication information, the eighth indication information, or the ninth indication information, wherein the third CSI is channel information corresponding to the first CSI; or
determining the second CSI corresponding to the third CSI based on one or more of: the information indicating the first information corresponding to the second CSI, the third indication information, the fourth indication information, the fifth indication information, the sixth indication information, the seventh indication information, the eighth indication information, or the ninth indication information, wherein the third CSI is channel information corresponding to the first CSI.

10. The method according to claim 5, wherein the pre-agreeing with the network device on the association relationship between the second CSI and the first CSI comprises one or more of:
the second CSI corresponding to the first CSI is: an M-th second CSI after the terminal sends the first CSI and receives first Downlink Control Information (DCI), wherein M is an integer greater than or equal to 1, and the first DCI is DCI for scheduling a PUSCH having a same Hybrid Automatic Repeat Request Identifier (HARQ ID) as a first Physical Uplink Shared Channel (PUSCH), and the first PUSCH is a PUSCH carrying the first CSI;
the second CSI corresponding to the first CSI is: a first second CSI after the terminal sends the first CSI and receives the first DCI, wherein the first CSI is DCI for scheduling a PUSCH having a same resource identifier as the first PUSCH, and the first PUSCH is the PUSCH where the first CSI is transmitted;
N pieces of simultaneously transmitted second CSI have a one-to-one correspondence with N pieces of most recent first CSI before transmitting the second CSI, wherein N is an integer greater than or equal to 1;
N pieces of simultaneously transmitted second CSI have a one-to-one correspondence with N pieces of first CSI satisfying a preset time requirement before transmitting the second CSI, wherein N is an integer greater than or equal to 1;
ordering N pieces of simultaneously transmitted second CSI based on target information corresponding to the first CSI corresponding to the N pieces of second CSI, wherein N is an integer greater than or equal to 1; or
pre-agreeing with the network device on an ordering manner of the second CSI in data or signaling carrying the second CSI.

11. The method according to claim 10, wherein the target information comprises one or more of:
model information;
time sequence;
CSI report information;
reference signal resource information; or
reference signal resource set information.

12. The method according to claim 5, wherein the second indication information comprises one or more of:
tenth indication information, wherein the tenth indication information is used for indicating an identifier of the first CSI;
eleventh indication information, wherein the eleventh indication information is used for indicating resource information of the second CSI corresponding to the first CSI;
twelfth indication information, wherein the twelfth indication information is used for indicating channel related information corresponding to the second CSI corresponding to the first CSI; or
thirteenth indication information, wherein the thirteenth indication information is used for indicating model information corresponding to the second CSI corresponding to the first CSI.

13. The method according to claim 1, wherein the evaluating the performance of the first model and/or the first method based on the second CSI comprises:
calculating a performance metric based on the second CSI;
evaluating the performance of the first model and/or the first method based on the performance metric.

14. The method according to claim 13, wherein the calculating the performance metric based on the second CSI comprises:
calculating the performance metric based on third CSI and the second CSI; or
obtaining an equivalent channel based on an raw channel corresponding to the first CSI and the second CSI, and calculating the performance metric based on the equivalent channel; or
calculating a first performance metric corresponding to the third CSI and a second performance metric corresponding to the second CSI respectively, wherein the performance metric comprises the first performance metric and the second performance metric;
wherein the third CSI is channel information determined based on a downlink reference signal corresponding to the first CSI, or the third CSI is input information of a second model, or the third CSI is CSI for obtaining input information of the second model, and the second model is used for determining the first CSI.

15. The method according to claim 13 or 14, wherein the performance metric comprises one or more of:
an accuracy metric;
a system performance metric;
a metric corresponding to a distribution; or
a channel quality related metric.

16. The method according to claim 1, wherein the transmitting the first Channel State Information (CSI) to the network device comprises:
determining the first CSI based on the first model or a second model;
transmitting the first CSI to the network device;
wherein the first model and the second model have an association relationship.

17. The method according to claim 1, wherein
the second CSI is obtained based on the second model, and the first CSI is used as an input to the second model; and/or
the second CSI is obtained through the second model, wherein the resulting data of de-quantizing or pre-processing the first CSI is used as an input to the second model; and/or
the second CSI is an output of the second model; and/or
the second CSI is obtained by post-processing the output of the second model; and/or the second CSI is obtained based on the first model, and the first CSI is used as an input to the first model; and/or
the second CSI is obtained through the second model, wherein the resulting data of de-quantizing or pre-processing the first CSI is used as an input to the first model; and/or
the second CSI is an output of the first model; and/or
the second CSI is obtained by post-processing the output of the first model;
wherein the second model and the first model have an association relationship.

18. The method according to claim 16 or 17, wherein the association relationship between the first model and the second model comprises one or more of:
a dataset used to train the first model has an association relationship with a dataset used to train the second model;
the first model and the second model have a same model identifier;
the first model and the second model are obtained through joint training; or
configurations corresponding to the first model and the second model are at least partially the same.

19. The method according to claim 18, wherein the configuration comprises one or more of:
antenna configuration, CSI Reference Signal (CSI-RS) resource configuration, CSI reporting configuration, CSI-RS resource set configuration, or resource configuration.

20. The method according to claim 1, wherein the second CSI comprises one or more of:
precoding matrix information, layer number information, eigenvector, or full channel information.

21. The method according to any one of claims 2 to 12, wherein the target object comprises at least one of:
third CSI corresponding to the first CSI;
the first model;
a second model corresponding to the first model; or
the first method.

22. The method according to claim 1, further comprising:
obtaining information of the first model, wherein the information of the first model is obtained by one or more of:
obtained in a predefined manner;
obtained from the network device;
obtained through higher layer signaling.

23. An information processing method, applied to a network device, comprising:
receiving first CSI transmitted by a terminal;
transmitting second CSI to the terminal in response to the first CSI;
wherein the second CSI is used for evaluating a performance of a first model and/or a first method, the first model is a model for determining CSI, and the first method is a method for determining and/or feeding back CSI.

24. The method according to claim 23, further comprising:
obtaining an association relationship between the second CSI and the first CSI based on an association relationship between the second CSI and a target object; or,
obtaining an association relationship between the second CSI and a target object based on the association relationship between the second CSI and the first CSI.

25. The method according to claim 24, wherein the transmitting the second CSI to the terminal comprises:
transmitting the second CSI to the terminal based on the association relationship between the second CSI and the first CSI; or,
transmitting the second CSI to the terminal based on the association relationship between the second CSI and the target object.

26. The method according to claim 23, further comprising any one of:
transmitting first indication information to the terminal, wherein the first indication information is used for indicating the association relationship between the second CSI and the first CSI and/or an association relationship between the second CSI and a target object;
pre-agreeing with the terminal on the association relationship between the second CSI and the first CSI and/or the association relationship between the second CSI and a target object; or
receiving second indication information transmitted by the terminal, and obtaining an association relationship between the second CSI and a target object based on the second indication information, wherein the second indication information is used for indicating the association relationship between the second CSI and the first CSI and/or the association relationship between the second CSI and the target object.

27. The method according to claim 26, wherein the first indication information comprises one or more of:
information indicating first information corresponding to the second CSI; wherein the first information comprises one or more of: an identifier of a reference signal and/or a transmission occasion of a reference signal, an identifier of a reference signal resource and/or a transmission occasion of a reference signal resource, an identifier of a reference signal resource set and/or a transmission occasion of a reference signal resource set, a reference signal resource configuration, or a reference resource configuration;
third indication information, wherein the third indication information is used for indicating an association relationship between the second CSI and CSI report configuration information, and/or, used for indicating an association relationship between the second CSI and time domain resource information and/or frequency domain resource information of a CSI report;
fourth indication information, wherein the fourth indication information is used for indicating channel related information corresponding to the second CSI;
fifth indication information, wherein the fifth indication information is used for indicating an identifier of a model corresponding to the second CSI;
sixth indication information, wherein the sixth indication information is used for indicating a time offset between a transmission occasion of the first CSI and a transmission occasion of the second CSI;
seventh indication information, wherein the seventh indication information is used for indicating an association relationship between the second CSI and a model;
eighth indication information, wherein the eighth indication information is used for indicating an ordering manner of the second CSI in data or signaling carrying the second CSI;
ninth indication information, wherein the ninth indication information is used for indicating second information corresponding to the first CSI, wherein the second information comprises one or more of:
information of a channel where the second CSI is transmitted;
resource information corresponding to the second CSI;
a transmission occasion corresponding to the second CSI; or
model information corresponding to the second CSI.

28. The method according to claim 27, wherein the association relationship between the second CSI and the first CSI comprises one or more of:
the second CSI corresponds to the first CSI corresponding to the first information;
the second CSI corresponds to the first CSI satisfying a first condition and corresponding to the first information;
the second CSI corresponds to the first CSI corresponding to the third indication information;
the second CSI corresponds to the first CSI satisfying a second condition and corresponding to the third indication information;
the second CSI corresponds to the first CSI corresponding to the fourth indication information;
a model identifier corresponding to the first CSI corresponds to a model identifier corresponding to the second CSI;
a time offset between a transmission occasion of the first CSI and a transmission occasion of the second CSI is related to the time offset indicated by the sixth indication information;
the first CSI corresponds to the model corresponding to the second CSI;
the second CSI corresponds to the first CSI corresponding to the order of the second CSI;
the second CSI corresponds to a CSI report of the first CSI corresponding to the order of the second CSI; or
the first CSI corresponds to the second CSI corresponding to the second information.

29. The method according to claim 28, wherein in a case where the first CSI corresponds to the second CSI corresponding to the second information, the transmitting the second CSI to the terminal comprises one or more of:
determining a channel corresponding to the second CSI based on information of a channel where the second CSI is transmitted, and transmitting the second CSI at a resource position corresponding to the channel;
determining a transmission occasion of the second CSI based on a transmission occasion corresponding to the second CSI, and transmitting the second CSI at a time corresponding to the transmission occasion;
determining a time domain and/or frequency domain position where the second CSI is transmitted based on model information corresponding to the second CSI, and transmitting the second CSI based on the time domain and/or frequency domain position where the second CSI is transmitted; or
determining an association relationship between the first CSI and the second CSI based on model information corresponding to the second CSI, and transmitting the second CSI based on the association relationship between the first CSI and the second CSI.

30. The method according to claim 27, further comprising one or more of:
determining one or more of: the second CSI corresponding to the first CSI, transmission parameters of the second CSI corresponding to the first CSI, or a target object corresponding to the first CSI;
determining a target object corresponding to the second CSI;
determining third CSI corresponding to the second CSI, wherein the third CSI is channel information corresponding to the first CSI; or
determining transmission parameters of the second CSI corresponding to the third CSI, wherein the third CSI is channel information corresponding to the first CSI;
wherein the transmission parameters comprise parameters for transmitting the second CSI.

31. The method according to claim 26, wherein the second indication information comprises one or more of:
tenth indication information, wherein the tenth indication information is used for indicating an identifier of the first CSI;
eleventh indication information, wherein the eleventh indication information is used for indicating resource information of the second CSI corresponding to the first CSI;
twelfth indication information, wherein the twelfth indication information is used for indicating channel related information corresponding to the second CSI corresponding to the first CSI; or
thirteenth indication information, wherein the thirteenth indication information is used for indicating model information corresponding to the second CSI corresponding to the first CSI.

32. The method according to claim 31, further comprising:
determining one or more of the following based on one or more of the tenth indication information, the eleventh indication information, the twelfth indication information, and the thirteenth indication information:
the second CSI;
the association relationship between the first CSI and the second CSI;
time domain and/or frequency domain resources for transmitting the second CSI; or
channel parameters for transmitting the second CSI.

33. The method according to claim 26, wherein the pre-agreeing with the terminal on the association relationship between the second CSI and the first CSI and/or the association relationship between the second CSI and the target object comprises one or more of:
the second CSI corresponding to the first CSI is: the M-th second CSI after the terminal sends the first CSI and receives first Downlink Control Information (DCI), wherein M is an integer greater than or equal to 1, and the first DCI is DCI for scheduling a PUSCH having a same Hybrid Automatic Repeat Request Identifier (HARQ ID) as a first Physical Uplink Shared Channel (PUSCH), and the first PUSCH is the PUSCH carrying the first CSI;
the second CSI corresponding to the first CSI is: the first second CSI after the terminal sends the first CSI and receives the first DCI, wherein the first CSI is DCI for scheduling a PUSCH having a same resource identifier as the first PUSCH, and the first PUSCH is the PUSCH where the first CSI is transmitted;
N pieces of simultaneously transmitted second CSI have a one-to-one correspondence with N pieces of most recent first CSI before transmitting the second CSI, wherein N is an integer greater than or equal to 1;
N pieces of simultaneously transmitted second CSI have a one-to-one correspondence with N pieces of first CSI satisfying a preset time requirement before transmitting the second CSI, wherein N is an integer greater than or equal to 1;
ordering N pieces of simultaneously transmitted second CSI based on target information corresponding to the first CSI corresponding to the N pieces of second CSI, wherein N is an integer greater than or equal to 1; or
pre-agreeing with the terminal on an ordering manner of the second CSI in data or signaling carrying the second CSI.

34. The method according to claim 33, wherein the target information comprises one or more of:
model information;
time sequence;
CSI report information;
reference signal resource information; or
reference signal resource set information.

35. The method according to claim 24, wherein transmitting the second CSI to the terminal comprises one or more of:
determining a channel where the second CSI is transmitted based on channel information where the second CSI is transmitted, and transmitting the second CSI at a resource position corresponding to the channel;
determining a transmission occasion of the second CSI based on a transmission occasion corresponding to the second CSI, and transmitting the second CSI at a time corresponding to the transmission occasion;
determining a time domain and/or frequency domain position where the second CSI is transmitted based on model information corresponding to the second CSI, and transmitting the second CSI according to the time domain and/or frequency domain position where the second CSI is transmitted;
determining an association relationship between the first CSI and the second CSI based on model information corresponding to the second CSI, and transmitting the second CSI according to the association relationship between the first CSI and the second CSI; or
determining the second CSI based on the first model or a second model, and transmitting the second CSI, wherein the first model and the second model have an association relationship.

36. The method according to claim 23, wherein the second CSI is determined in one or more of the following ways:
using the first CSI as input to the first model and utilizing the first model to obtain the second CSI, or, using the first CSI as input to a second model and utilizing the second model to obtain the second CSI;
using the resulting data of de-quantizing or pre-processing the first CSI as an input to the first model and utilizing the first model to obtain the second CSI, or, using the resulting data of de-quantizing or pre-processing the first CSI as an input to the second model and utilizing the second model to obtain the second CSI;
using an output of the first model or the second model as the second CSI; or
obtaining the second CSI by post-processing the output of the first model or the second model.

37. The method according to claim 35 or 36, wherein the association relationship between the first model and the second model comprises one or more of:
a dataset used to train the first model has an association relationship with a dataset used to train the second model;
the first model and the second model have a same model identifier;
the first model and the second model are obtained through joint training; or
configurations corresponding to the first model and the second model are at least partially the same.

38. The method according to claim 37, wherein the configuration comprises one or more of:
antenna configuration, CSI-RS resource configuration, CSI reporting configuration, CSI-RS resource set configuration, or resource configuration.

39. The method according to claim 23, wherein the transmitting the second CSI to the terminal comprises:
transmitting one or more pieces of second CSI to the terminal through a Physical Downlink Shared Channel (PDSCH).

40. The method according to any one of claims 24 to 35, wherein the target object comprises at least one of:
third CSI corresponding to the first CSI;
the first model;
a second model corresponding to the first model; or
the first method.

41. An information processing device, applied to a terminal, comprising:
a first transmitting unit, used for sending first CSI to a network device;
a first receiving unit, used for receiving second CSI transmitted by the network device in response to the first CSI; and
a first processing unit, used for evaluating a performance of a first model and/or a first method based on the second CSI, wherein the first model is a model for determining CSI, and the first method is a method for determining and/or feeding back CSI.

42. The device according to claim 41, wherein the first processing unit comprises:
a first processing subunit, used for evaluating the performance of the first model and/or the first method based on the second CSI and an association relationship between the second CSI and the first CSI; or,
a second processing subunit, used for evaluating the performance of the first model and/or the first method based on the second CSI and an association relationship between the second CSI and a target object;
wherein the target object has an association relationship with the first CSI.

43. The device according to claim 41, further comprising:
a first obtaining unit, used for obtaining the association relationship between the second CSI and the first CSI based on an association relationship between the second CSI and a target object; or,
a second obtaining unit, used for obtaining the association relationship between the second CSI and a target object based on the association relationship between the second CSI and the first CSI.

44. The device according to claim 41, wherein the first receiving unit is further used to:
receive the second CSI based on an association relationship between the second CSI and the first CSI; or,
receive the second CSI based on an association relationship between the second CSI and a target object.

45. The device according to claim 41, further comprising any one of:
a second receiving unit, used for receiving first indication information transmitted by the network device, and obtain an association relationship between the second CSI and a target object based on the first indication information, wherein the first indication information is used for indicating the association relationship between the second CSI and the first CSI and/or the association relationship between the second CSI and the target object;
a second processing unit, used for pre-agreeing with the network device on the association relationship between the second CSI and the first CSI and/or the association relationship between the second CSI and a target object; or
a second transmitting unit, used for sending second indication information to the network device, wherein the second indication information is used for indicating the association relationship between the second CSI and the first CSI and/or the association relationship between the second CSI and a target object.

46. The device according to claim 45, wherein the first indication information comprises one or more of:
information indicating first information corresponding to the second CSI; wherein the first information comprises one or more of: an identifier of a reference signal and/or a transmission occasion of a reference signal, an identifier of a reference signal resource and/or a transmission occasion of a reference signal resource, an identifier of a reference signal resource set and/or a transmission occasion of a reference signal resource set, a reference signal resource configuration, or a reference resource configuration;
third indication information, wherein the third indication information is used for indicating an association relationship between the second CSI and CSI report configuration information, and/or, used for indicating an association relationship between the second CSI and time domain resource information and/or frequency domain resource information of a CSI report;
fourth indication information, wherein the fourth indication information is used for indicating channel related information corresponding to the second CSI;
fifth indication information, wherein the fifth indication information is used for indicating an identifier of a model corresponding to the second CSI;
sixth indication information, wherein the sixth indication information is used for indicating a time offset between a transmission occasion of the first CSI and a transmission occasion of the second CSI;
seventh indication information, wherein the seventh indication information is used for indicating an association relationship between the second CSI and a model;
eighth indication information, wherein the eighth indication information is used for indicating an ordering manner of the second CSI in data or signaling carrying the second CSI; or
ninth indication information, wherein the ninth indication information is used for indicating second information corresponding to the first CSI, wherein the second information comprises one or more of:
information of a channel where the second CSI is transmitted;
resource information corresponding to the second CSI;
a transmission occasion corresponding to the second CSI; or
model information corresponding to the second CSI.

47. The device according to claim 46, wherein the association relationship between the second CSI and the first CSI comprises one or more of:
the second CSI corresponds to the first CSI corresponding to the first information;
the second CSI corresponds to the first CSI satisfying a first condition and corresponding to the first information;
the second CSI corresponds to the first CSI corresponding to the third indication information;
the second CSI corresponds to the first CSI satisfying a second condition and corresponding to the third indication information;
the second CSI corresponds to the first CSI corresponding to the fourth indication information;
a model identifier corresponding to the first CSI corresponds to a model identifier corresponding to the second CSI;
a time offset between a transmission occasion of the first CSI and a transmission occasion of the second CSI is related to the time offset indicated by the sixth indication information;
the first CSI corresponds to the model corresponding to the second CSI;
the second CSI corresponds to the first CSI corresponding to the order of the second CSI;
the second CSI corresponds to a CSI report of the first CSI corresponding to the order of the second CSI; or
the first CSI corresponds to the second CSI corresponding to the second information.

48. The device according to claim 47, wherein, in a case where the first CSI corresponds to the second CSI corresponding to the second information, the first receiving unit is used for performing one or more of:
determining a channel corresponding to the second CSI based on information of a channel where the second CSI is transmitted, and receiving the second CSI at a resource position corresponding to the channel;
determining a transmission occasion of the second CSI based on a transmission occasion corresponding to the second CSI, and receiving the second CSI at a time corresponding to the transmission occasion;
determining a time domain and/or frequency domain position where the second CSI is transmitted based on model information corresponding to the second CSI, and receiving the second CSI based on the time domain and/or frequency domain position where the second CSI is transmitted; or
determining an association relationship between the first CSI and the second CSI based on model information corresponding to the second CSI, and receiving the second CSI based on the association relationship between the first CSI and the second CSI.

49. The device according to claim 46, further comprising a third processing unit used for performing one or more of:
determining one or more of the second CSI corresponding to the first CSI or a target object corresponding to the first CSI, based on one or more of: the information indicating the first information corresponding to the second CSI, the third indication information, the fourth indication information, the fifth indication information, the sixth indication information, the seventh indication information, the eighth indication information, or the ninth indication information;
determining one or more of the first CSI corresponding to the second CSI or a target object corresponding to the second CSI, based on one or more of: the information indicating the first information corresponding to the second CSI, the third indication information, the fourth indication information, the fifth indication information, the sixth indication information, the seventh indication information, the eighth indication information, and the ninth indication information;
determining third CSI corresponding to the second CSI based on one or more of: the information indicating the first information corresponding to the second CSI, the third indication information, the fourth indication information, the fifth indication information, the sixth indication information, the seventh indication information, the eighth indication information, and the ninth indication information, wherein the third CSI is channel information corresponding to the first CSI;
determining the second CSI corresponding to the third CSI based on one or more of: the information indicating the first information corresponding to the second CSI, the third indication information, the fourth indication information, the fifth indication information, the sixth indication information, the seventh indication information, the eighth indication information, and the ninth indication information, wherein the third CSI is channel information corresponding to the first CSI.

50. The device according to claim 45, wherein the second processing unit is used for performing one or more of:
the second CSI corresponding to the first CSI is: the M-th second CSI after the terminal sends the first CSI and receives first Downlink Control Information (DCI), wherein M is an integer greater than or equal to 1, and the first DCI is DCI for scheduling a PUSCH having a same Hybrid Automatic Repeat Request Identifier (HARQ ID) as a first Physical Uplink Shared Channel (PUSCH), and the first PUSCH is the PUSCH carrying the first CSI;
the second CSI corresponding to the first CSI is: the first second CSI after the terminal sends the first CSI and receives the first DCI, wherein the first CSI is DCI for scheduling a PUSCH having a same resource identifier as the first PUSCH, and the first PUSCH is the PUSCH where the first CSI is transmitted;
N pieces of simultaneously transmitted second CSI have a one-to-one correspondence with N pieces of most recent first CSI before transmitting the second CSI, wherein N is an integer greater than or equal to 1;
N pieces of simultaneously transmitted second CSI have a one-to-one correspondence with N pieces of first CSI satisfying a preset time requirement before transmitting the second CSI, wherein N is an integer greater than or equal to 1;
ordering N pieces of simultaneously transmitted second CSI based on target information corresponding to the first CSI corresponding to the N pieces of second CSI, wherein N is an integer greater than or equal to 1; or
pre-agreeing with the network device on an ordering manner of the second CSI in data or signaling carrying the second CSI.

51. The device according to claim 50, wherein the target information comprises one or more of:
model information;
time sequence;
CSI report information;
reference signal resource information; or
reference signal resource set information.

52. The device according to claim 45, wherein the second indication information comprises one or more of:
tenth indication information, wherein the tenth indication information is used for indicating an identifier of the first CSI;
eleventh indication information, wherein the eleventh indication information is used for indicating resource information of the second CSI corresponding to the first CSI;
twelfth indication information, wherein the twelfth indication information is used for indicating channel related information corresponding to the second CSI corresponding to the first CSI; or
thirteenth indication information, wherein the thirteenth indication information is used for indicating model information corresponding to the second CSI corresponding to the first CSI.

53. The device according to claim 41, wherein the first processing unit comprises:
a first calculation subunit, used for calculating a performance metric based on the second CSI;
a first evaluation subunit, used for evaluating the performance of the first model and/or the first method based on the performance metric.

54. The device according to claim 53, wherein the first calculation subunit is used to:
calculate the performance metric based on third CSI and the second CSI; or
obtain an equivalent channel based on a raw channel corresponding to the first CSI and the second CSI, and calculate the performance metric based on the equivalent channel; or
calculate a first performance metric corresponding to the third CSI and a second performance metric corresponding to the second CSI respectively, wherein the performance metric comprises the first performance metric and the second performance metric;
wherein the third CSI is channel information determined based on a downlink reference signal corresponding to the first CSI, or the third CSI is input information of a second model, or the third CSI is CSI for obtaining input information of the second model, and the second model is used for determining the first CSI.

55. The device according to claim 53 or 54, wherein the performance metric comprises one or more of:
an accuracy metric;
a system performance metric;
a metric corresponding to a distribution;
a channel quality related metric.

56. The device according to claim 41, wherein the first transmitting unit comprises:
a first determination subunit, used for determining the first CSI based on the first model or a second model;
a first transmitting subunit, used for sending the first CSI to the network device;
wherein the first model and the second model have an association relationship.

57. The device according to claim 41, further comprising a fourth processing unit used for performing one or more of:
the second CSI is obtained based on the second model, and the first CSI is used as an input to the second model;
the second CSI is obtained based on the second model, wherein the resulting data of de-quantizing or pre-processing the first CSI is used as an input to the second model;
the second CSI is an output of the second model;
the second CSI is obtained by post-processing the output of the second model;
the second CSI is obtained based on the first model, and the first CSI is used as an input to the first model;
using the resulting data of de-quantizing or pre-processing the first CSI as an input to the first model the second CSI is obtained through the second model, wherein the resulting data of de-quantizing or pre-processing the first CSI is used as an input to the first model;
the second CSI is an output of the first model;
the second CSI is obtained by post-processing the output of the first model;
wherein the second model and the first model have an association relationship.

58. The device according to claim 56 or 57, wherein the association relationship between the first model and the second model comprises one or more of:
a dataset used to train the first model has an association relationship with a dataset used to train the second model;
the first model and the second model have a same model identifier;
the first model and the second model are obtained through joint training; or
configurations corresponding to the first model and the second model are at least partially the same.

59. The device according to claim 58, wherein the configuration comprises one or more of:
antenna configuration, CSI Reference Signal (CSI-RS) resource configuration, CSI reporting configuration, CSI-RS resource set configuration, or resource configuration.

60. The device according to claim 41, wherein the second CSI comprises one or more of:
precoding matrix information, layer number information, an eigenvector, or full channel information.

61. The device according to any one of claims 42 to 52, wherein the target object comprises at least one of:
third CSI corresponding to the first CSI;
the first model;
a second model corresponding to the first model; or
the first method.

62. The device according to claim 41, further comprising:
a third obtaining unit, used for obtaining information of the first model, wherein the information of the first model is obtained by one or more of:
obtained in a predefined manner;
obtained from the network device; or
obtained through higher layer signaling.

63. An information processing device, applied to a network device, comprising:
a first receiving unit, used for receiving first CSI transmitted by a terminal;
a first transmitting unit, used for sending second CSI to the terminal in response to the first CSI;
wherein the second CSI is used for evaluating a performance of a first model and/or a first method, the first model is a model for determining CSI, and the first method is a method for determining and/or feeding back CSI.

64. The device according to claim 63, further comprising:
a first obtaining unit, used for obtaining an association relationship between the second CSI and the first CSI based on an association relationship between the second CSI and a target object; or,
a second obtaining unit, used for obtaining an association relationship between the second CSI and a target object based on the association relationship between the second CSI and the first CSI.

65. The device according to claim 64, wherein the first transmitting unit is further used to:
send the second CSI to the terminal based on the association relationship between the second CSI and the first CSI; or,
send the second CSI to the terminal based on the association relationship between the second CSI and the target object.

66. The device according to claim 63, further comprising any one of:
a third transmitting unit, used for sending first indication information to the terminal, wherein the first indication information is used for indicating the association relationship between the second CSI and the first CSI and/or an association relationship between the second CSI and a target object;
a first processing unit, used for pre-agreeing with the terminal on the association relationship between the second CSI and the first CSI and/or the association relationship between the second CSI and the target object;
a second receiving unit, used for receiving second indication information transmitted by the terminal, and obtain an association relationship between the second CSI and the target object based on the second indication information, wherein the second indication information is used for indicating the association relationship between the second CSI and the first CSI and/or the association relationship between the second CSI and the target object.

67. The device according to claim 66, wherein the first indication information comprises one or more of:
information indicating first information corresponding to the second CSI; wherein the first information comprises one or more of: an identifier of a reference signal and/or a transmission occasion of a reference signal, an identifier of a reference signal resource and/or a transmission occasion of a reference signal resource, an identifier of a reference signal resource set and/or a transmission occasion of a reference signal resource set, a reference signal resource configuration, a reference resource configuration;
third indication information, wherein the third indication information is used for indicating an association relationship between the second CSI and CSI report configuration information, and/or, used for indicating an association relationship between the second CSI and time domain resource information and/or frequency domain resource information of a CSI report;
fourth indication information, wherein the fourth indication information is used for indicating channel related information corresponding to the second CSI;
fifth indication information, wherein the fifth indication information is used for indicating an identifier of a model corresponding to the second CSI;
sixth indication information, wherein the sixth indication information is used for indicating a time offset between a transmission occasion of the first CSI and a transmission occasion of the second CSI;
seventh indication information, wherein the seventh indication information is used for indicating an association relationship between the second CSI and a model;
eighth indication information, wherein the eighth indication information is used for indicating an ordering manner of the second CSI in data or signaling carrying the second CSI; or
ninth indication information, wherein the ninth indication information is used for indicating second information corresponding to the first CSI, wherein the second information comprises one or more of:
information of a channel where the second CSI is transmitted;
resource information corresponding to the second CSI;
a transmission occasion corresponding to the second CSI; or
model information corresponding to the second CSI.

68. The device according to claim 67, wherein the association relationship between the second CSI and the first CSI comprises one or more of:
the second CSI corresponds to the first CSI corresponding to the first information;
the second CSI corresponds to the first CSI satisfying a first condition and corresponding to the first information;
the second CSI corresponds to the first CSI corresponding to the third indication information;
the second CSI corresponds to the first CSI satisfying a second condition and corresponding to the third indication information;
the second CSI corresponds to the first CSI corresponding to the fourth indication information;
a model identifier corresponding to the first CSI corresponds to a model identifier corresponding to the second CSI;
a time offset between a transmission occasion of the first CSI and a transmission occasion of the second CSI is related to the time offset indicated by the sixth indication information;
the first CSI corresponds to the model corresponding to the second CSI;
the second CSI corresponds to the first CSI corresponding to the order of the second CSI;
the second CSI corresponds to a CSI report of the first CSI corresponding to the order of the second CSI; or
the first CSI corresponds to the second CSI corresponding to the second information.

69. The device according to claim 68, wherein, in a case where the first CSI corresponds to the second CSI corresponding to the second information, the first transmitting unit is further used for performing one or more of:
determining a channel corresponding to the second CSI based on information of a channel where the second CSI is transmitted, and transmitting the second CSI at a resource position corresponding to the channel;
determining a transmission occasion of the second CSI based on a transmission occasion corresponding to the second CSI, and transmitting the second CSI at a time corresponding to the transmission occasion;
determining a time domain and/or frequency domain position where the second CSI is transmitted based on model information corresponding to the second CSI, and transmitting the second CSI based on the time domain and/or frequency domain position where the second CSI is transmitted; or
determining an association relationship between the first CSI and the second CSI based on model information corresponding to the second CSI, and transmitting the second CSI based on the association relationship between the first CSI and the second CSI.

70. The device according to claim 67, further comprising:
a fifth processing unit, used for performing one or more of:
determining one or more of: the second CSI corresponding to the first CSI, transmission parameters of the second CSI corresponding to the first CSI, or a target object corresponding to the first CSI;
determining a target object corresponding to the second CSI;
determining third CSI corresponding to the second CSI, wherein the third CSI is channel information corresponding to the first CSI;
determining transmission parameters of the second CSI corresponding to the third CSI, wherein the third CSI is channel information corresponding to the first CSI;
wherein the transmission parameters comprise parameters for transmitting the second CSI.

71. The device according to claim 66, wherein the second indication information comprises one or more of:
tenth indication information, wherein the tenth indication information is used for indicating an identifier of the first CSI;
eleventh indication information, wherein the eleventh indication information is used for indicating resource information of the second CSI corresponding to the first CSI;
twelfth indication information, wherein the twelfth indication information is used for indicating channel related information corresponding to the second CSI corresponding to the first CSI; or
thirteenth indication information, wherein the thirteenth indication information is used for indicating model information corresponding to the second CSI corresponding to the first CSI.

72. The device according to claim 71, further comprising:
a sixth processing unit, used for determining one or more of the following based on one or more of the tenth indication information, the eleventh indication information, the twelfth indication information, and the thirteenth indication information:
the second CSI;
the association relationship between the first CSI and the second CSI;
time domain and/or frequency domain resources for transmitting the second CSI;
channel parameters for transmitting the second CSI.

73. The device according to claim 66, wherein the pre-agreeing with the terminal on the association relationship between the second CSI and the first CSI and/or the association relationship between the second CSI and the target object comprises one or more of:
the second CSI corresponding to the first CSI is: the M-th second CSI after the terminal sends the first CSI and receives first Downlink Control Information (DCI), wherein M is an integer greater than or equal to 1, and the first DCI is DCI for scheduling a PUSCH having a same Hybrid Automatic Repeat Request Identifier (HARQ ID) as a first Physical Uplink Shared Channel (PUSCH), and the first PUSCH is the PUSCH carrying the first CSI;
the second CSI corresponding to the first CSI is: the first second CSI after the terminal sends the first CSI and receives the first DCI, wherein the first CSI is DCI for scheduling a PUSCH having a same resource identifier as the first PUSCH, and the first PUSCH is the PUSCH where the first CSI is transmitted;
N pieces of simultaneously transmitted second CSI have a one-to-one correspondence with N pieces of most recent first CSI before transmitting the second CSI, wherein N is an integer greater than or equal to 1;
N pieces of simultaneously transmitted second CSI have a one-to-one correspondence with N pieces of first CSI satisfying a preset time requirement before transmitting the second CSI, wherein N is an integer greater than or equal to 1;
ordering N pieces of simultaneously transmitted second CSI based on target information corresponding to the first CSI corresponding to the N pieces of second CSI, wherein N is an integer greater than or equal to 1; or
pre-agreeing with the terminal on an ordering manner of the second CSI in data or signaling carrying the second CSI.

74. The device according to claim 73, wherein the target information comprises one or more of:
model information;
time sequence;
CSI report information;
reference signal resource information; or
reference signal resource set information.

75. The device according to claim 64, wherein the first transmitting unit is further used for performing one or more of:
determining a channel where the second CSI is transmitted based on channel information where the second CSI is transmitted, and transmitting the second CSI at a resource position corresponding to the channel;
determining a transmission occasion of the second CSI based on a transmission occasion corresponding to the second CSI, and transmitting the second CSI at a time corresponding to the transmission occasion;
determining a time domain and/or frequency domain position where the second CSI is transmitted based on model information corresponding to the second CSI, and transmitting the second CSI according to the time domain and/or frequency domain position where the second CSI is transmitted;
determining an association relationship between the first CSI and the second CSI based on model information corresponding to the second CSI, and transmitting the second CSI according to the association relationship between the first CSI and the second CSI; or
determining the second CSI based on the first model or a second model, and transmitting the second CSI, wherein the first model and the second model have an association relationship.

76. The device according to claim 63, wherein the second CSI is determined in one or more of the following ways:
using the first CSI as input to the first model and utilizing the first model to obtain the second CSI, or, using the first CSI as input to a second model and utilizing the second model to obtain the second CSI;
using the resulting data of de-quantizing or pre-processing the first CSI as an input to the first model and utilizing the first model to obtain the second CSI, or, using the resulting data of de-quantizing or pre-processing the first CSI as an input to the second model and utilizing the second model to obtain the second CSI; or
using an output of the first model or the second model as the second CSI;
the second CSI is obtained by post-processing the output of the first model or the second model.

77. The device according to claim 75 or 76, wherein the association relationship between the first model and the second model comprises one or more of:
a dataset used to train the first model has an association relationship with a dataset used to train the second model;
the first model and the second model have a same model identifier;
the first model and the second model are obtained through joint training; or
configurations corresponding to the first model and the second model are at least partially the same.

78. The device according to claim 77, wherein the configuration comprises one or more of:
antenna configuration, CSI-RS resource configuration, CSI reporting configuration, CSI-RS resource set configuration, or resource configuration.

79. The device according to claim 63, wherein the first transmitting unit is further used to:
send one or more pieces of second CSI to the terminal through a Physical Downlink Shared Channel (PDSCH).

80. The device according to any one of claims 64 to 75, wherein the target object comprises at least one of:
third CSI corresponding to the first CSI;
the first model;
a second model corresponding to the first model; or
the first method.

81. An information processing device, applied to a terminal, comprising: a memory, a transceiver, a processor:
a memory, used to store a computer program;
a transceiver, used to transmit and receive data under control of the processor;
a processor, used to read the computer program in the memory to perform:
transmitting first CSI to a network device;
receiving second CSI transmitted by the network device in response to the first CSI; and
evaluating a performance of a first model and/or a first method based on the second CSI, wherein the first model is a model for determining CSI, and the first method is a method for determining and/or feeding back CSI.

82. An information processing device, applied to a network device, the device comprising: a memory, a transceiver, a processor:
a memory, used to store a computer program;
a transceiver, used to transmit and receive data under control of the processor;
a processor, used to read the computer program in the memory to perform:
receiving first CSI transmitted by a terminal;
transmitting second CSI to the terminal in response to the first CSI;
wherein the second CSI is used for evaluating a performance of a first model and/or a first method, the first model is a model for determining CSI, and the first method is a method for determining and/or feeding back CSI.

83. A processor-readable storage medium, storing a computer program, wherein the computer program is used to cause the processor to execute the method according to any one of claims 1 to 40.
